# EUROPEAN PATENT SPECIFICATION

(11) **EP 4 562 871 B1**
(45) Date of publication and mention of the grant of the patent: **02.09.2026**
(21) Application number: 22823579.2
(22) Date of filing: 02.12.2022
(51) Int. Cl.: G01S 13/00, H04W 4/38, G01S 13/76, G01S 7/00, H04W 4/021

(54) **NETWORK FUNCTIONS AND A SENSING NODE FOR SENSING OPERATIONS IN A COMMUNICATION SYSTEM**
NETZWERKFUNKTIONEN UND MESSKNOTEN FÜR MESSOPERATIONEN IN EINEM KOMMUNIKATIONSSYSTEM
FONCTIONS DE RÉSEAU ET NOEUD DE DÉTECTION POUR DES OPÉRATIONS DE DÉTECTION DANS UN SYSTÈME DE COMMUNICATION

(43) Date of publication of application: 04.06.2025
(73) Proprietor: Huawei Technologies Co., Ltd., Shenzhen, Guangdong 518129 (CN)
(72) Inventor: HAMIDIAN, Ali, 16440 Kista (SE); KRENDZEL, Andrey, 16440 Kista (SE); RIGAZZI, Giovanni, 16440 Kista (SE); VAKEESAR, Siva, 16440 Kista (SE)
(74) Representative: Isarpatent
(86) International application number: PCT/EP2022/084298
(87) International publication number: WO 2024/114930

(56) References cited:
- US-A1- 2014 185 653
- US-A1- 2022 191 819
- US-A1- 2022 240 168

## Description

### TECHNICAL FIELD

Examples of the invention relate to a first network function, a second network function, and a sensing node for sensing operations in a communication system. Furthermore, examples of the invention also relate to corresponding methods and a computer program.

### BACKGROUND

5G-based localization, ranging and sensing technologies have drawn wide-spread interests in a number of use cases and applications across a wide variety of areas such as intelligent transport system (ITS) or automotive, industrial factories, health-care and smarthome. Localization refers to the process of determining where a target object is located with respect to its environment in terms of 3-dimensional space, while ranging refers to the determination of the distance between two user equipment (UEs) and/or the direction of one UE from the other one through direct device connection. Sensing, on the other hand, is wide in scope and refers to determining events or changes in an environment and the determination of the range including distance, elevation angle and azimuth angle, speed and/or motion information of a target object. Wireless sensing aims at acquiring information about a remote target object or environment and its characteristics without physically contacting it. The intention is to detect, localize and track a target object, extract features of the target object, and find out user gestures for easy human-machine touchless interactions. Sensing can be achieved with the help of radio detection and ranging (RADAR), light detection and ranging (LiDAR) and cameras.

With the rapid increase of mobile devices having the ability to detect surrounding environment and objects using 3GPP-based cellular system, a number of more futuristic and attractive applications and services that can benefit from combined communication and sensing is emerging. Given that a conventional ranging technique such as RADAR is limited by its line-of-sight requirement and LIDAR or camera technologies have limitations in adverse weather conditions, the current interest is to bring two conventionally independent technologies such as RADAR and cellular communications together through an integrated sensing and communication mechanism.

US 2014/0185653 A1 discloses a method for obtaining an idle spectrum. US 2022/0191819 A1 discloses systems for associating sensing information with a user by determining information from both a sensing node and a communication node, then associating the sensed object and the communication node based on the information. US 2022/0240168 A1 discloses a computing node to implement a management entity in a CP-based network.

### SUMMARY

An objective of examples of the invention is to provide a solution which mitigates or solves the drawbacks and problems of conventional solutions.

Another objective of examples of the invention is to provide a solution for managing sensing operations in a communications system in an efficient way.

The above and further objectives are solved by the subject matter of the independent claims. Further advantageous examples of the invention can be found in the dependent claims.

According to a first aspect of the invention, the above mentioned and other objectives are achieved with a first network function for a communication system, the first network function being configured to
receive a sensing request indicating one or more sensing requirements for a sensing event, the sensing event comprising a sensing target in a sensing area;
determine a sensing type for the sensing event based on the sensing request, the sensing type involving one or more sensing nodes for the sensing event;
transmit a service request to a second network function, the service request indicating the sensing event;
receive a service response from the second network function, the service response indicating a first set of sensing nodes for the sensing event, wherein the first set of sensing nodes are sensing nodes which can be used to support the sensing event;
select a second set of sensing nodes for the sensing event from the first set of sensing nodes based on the sensing type; and
transmit a sensing event configuration indicating the second set of sensing nodes for the sensing event.

The communication system may also be denoted an integrated sensing and communication system. Furthermore, a sensing event can be understood to comprise determining physical events or changes occurred in a given sensing area and determining the range (distance, elevation angle and azimuth angle), speed and/or motion information of a sensing target with the help of one or many sensing nodes in a particular time period.

An advantage of the first network function according to the first aspect is that the first network function can provide required functionalities and features to accept sensing requests and execute appropriate sensing operations based on information the first network function already contains and sensing requirements of a sensing request. A sensing operation can be understood to comprise configuring appropriate sensing nodes to enable sensing-related coordinated transmission and reception of appropriate radiofrequency waveforms while taking appropriate measurements for the purpose of determining events or changes in an environment and determining the range (distance, elevation angle and azimuth angle), speed and/or motion information of a sensing target.

In an implementation form of a first network function according to the first aspect, the one or more sensing requirements comprises one or more key performance indicators associated with: a horizontal accuracy/resolution, a vertical accuracy/resolution, an orientation accuracy/resolution, and a velocity accuracy/resolution for the sensing event.

An advantage with this implementation form is that depending on sensing requirements different types of sensing operations can be executed.

In an implementation form of a first network function according to the first aspect, the service request further indicates at least one of: a geographical coordinate of the sensing target, a maximum sensing range with respect to the sensing target, and a maximum allowed relative speed of a sensing node with respect to the sensing target.

An advantage with this implementation form is that in order to achieve required sensing accuracy, limitations can be imposed in terms of a geographical coordinate, a sensing range and relative speed of a possible sensing node with respect to a sensing target.

In an implementation form of a first network function according to the first aspect, the service response indicates an identity for each sensing node in the first set of sensing nodes.

An advantage with this implementation form is that the first network function can identify the sensing nodes in the first set of sensing nodes and appropriate criteria can be applied in selecting appropriate sensing nodes in order to achieve required sensing accuracy.

In an implementation form of a first network function according to the first aspect, the first network function is further configured to:
select the second set of sensing nodes further based on a sensing capability and a sensing configuration of each sensing node in the first set of sensing nodes.

An advantage with this implementation form is that the selection of appropriate sensing nodes can be improved, thereby enhancing the sensing accuracy.

In an implementation form of a first network function according to the first aspect, the first network function is further configured to:
receive information about the sensing capability and the sensing configuration of a sensing node from the sensing node or an application function associated with the sensing node.

An advantage with this implementation form is that the first network function gathers sensing capabilities of sensing nodes in order to determine which sensing node is appropriate for a given sensing operation.

In an implementation form of a first network function according to the first aspect,
the sensing capability comprises one or more of: a supported sensing type, a supported sensing method, a supported sensing hardware, a supported sensing software, and supported sensing measurements; and
the sensing configuration comprises one or more of: a sensing activation time period, a sensing rate, and the sensing area.

An advantage with this implementation form is that the first network function can gather a lot of different types of sensing capabilities and configurations of a sensing node, enabling the first network function to decide on appropriateness of a given sensing node for a particular sensing operation.

In an implementation form of a first network function according to the first aspect, the first network function is further configured to:
determine a sensing method for the sensing event based on the sensing request, the sensing method indicating a method for deriving a sensing result for the sensing event based on sensing measurements; and
select the second set of sensing nodes further based on the sensing method.

An advantage with this implementation form is that appropriate sensing methods are considered in order to achieve required sensing accuracy.

In an implementation form of a first network function according to the first aspect, the first network function is further configured to:
receive sensing measurements from the second set of sensing nodes; and
determine the sensing result for the sensing event based on the sensing measurements, the sensing type and the sensing method.

An advantage with this implementation form is that any sensing operation may be executed by taking coordinated sensing measurements while using appropriate sensing method and sensing type that can help the first network function to determine a sensing result.

In an implementation form of a first network function according to the first aspect, the first network function is further configured to:
determine that the sensing event has occurred based on the sensing result; and
transmit a sensing notification indicating that the sensing event has occurred.

An advantage with this implementation form is that whenever a sensing event is determined to have taken place, an appropriate notification can be generated by the first network function so that required, e.g., remedial, actions can be taken.

In an implementation form of a first network function according to the first aspect, the first network function is further configured to:
receive a sensing event subscription request from an application function or an access and mobility management function; and
transmit the sensing notification to the application function or the access and mobility management function.

An advantage with this implementation form is that a network function can subscribe to sensing notification and appropriate sensing notifications can be generated based on the sensing event subscription in order to bring down signaling overhead.

In an implementation form of a first network function according to the first aspect, the first network function is configured to:
store information about a reward scheme subscribed by a sensing node.

An advantage with this implementation form is that by maintaining subscribed reward scheme information and current reward status per sensing node, participating sensing nodes can be rewarded.

In an implementation form of a first network function according to the first aspect, the first network function is further configured to:
transmit an authorization request indicating the sensing request prior to transmitting the service request; and
transmit the service request upon receiving an authorization response indicating an authorization of the sensing request.

An advantage with this implementation form is that each sensing request is acted upon only when it has been authorized so that unauthorized sensing requests can be ignored.

In an implementation form of a first network function according to the first aspect, the first network function is further configured to:
receive the sensing request from an application function or an access and mobility management function; and
transmit the sensing event configuration to a radio access network via an access and mobility management function.

An advantage with this implementation form is that appropriate sensing event configurations can be determined and passed on to a radio access network for further execution based on each sensing request.

In an implementation form of a first network function according to the first aspect, the first network function is a part of a network data analytics function, a location management function, or an access and mobility management function.

An advantage with this implementation form is that the new functionalities can be added to an existing network function which simplifies the implementation.

According to a second aspect of the invention, the above mentioned and other objectives are achieved with a second network function for a communication system according to claim 12, the second network function being configured to
receive a service request from a first network function, the service request indicating a sensing event, the sensing event comprising a sensing target in a sensing area;
determine a first set of sensing nodes for the sensing event based on the service request; and
transmit a service response to the first network function, the service response indicating the first set of sensing nodes for the sensing event.

An advantage of the second network function according to the second aspect is that the second network function can select appropriate sensing nodes for the sensing event based on the sensing request and e.g., the sensing area. The sensing operation and sensing accuracy can thereby be enhanced.

In an implementation form of a second network function according to the second aspect, the service request further indicates at least one of: a geographical coordinate of the sensing target, a maximum sensing range with respect to the sensing target, and a maximum allowed relative speed of a sensing node with respect to the sensing target.

An advantage with this implementation form is that the second network function can select appropriate sensing nodes based on their geographical coordinates, sensing range and relative speed with respect to the sensing target.

In an implementation form of a second network function according to the second aspect, the service response indicates an identity for each sensing node in the first set of sensing nodes.

An advantage with this implementation form is that the identities of the selected sensing nodes can be provided to the first network function, enabling the first network node to identify which sensing nodes to employ for a given sensing operation.

In an implementation form of a second network function according to the second aspect, the second network function is a location management function.

An advantage with this implementation form is that an existing network function can be enhanced to provide necessary functionalities which can simplify the implementation.

According to a third aspect of the invention, the above mentioned and other objectives are achieved with a sensing node for a communication system, the sensing node being configured to
transmit information about a sensing capability and a sensing configuration of the sensing node to a first network function.

An advantage of the sensing node according to the third aspect is that the sensing node can indicating sensing capabilities and configurations directly to the first network function, enabling the first network function to determine whether the sensing node is suitable for a given sensing request or operation.

In an implementation form of a sensing node according to the third aspect,
the sensing capability comprises one or more of: a supported sensing type, a supported sensing method, a supported sensing hardware, a supported sensing software, and supported sensing measurements; and
the sensing configuration comprises one or more of: a sensing activation time period, a sensing rate, and the sensing area.

An advantage with this implementation form is that a lot of different types of sensing capabilities and configurations are used in deciding on the appropriateness of a sensing node for a given sensing operation.

In an implementation form of a sensing node according to the third aspect, the sensing node is further configured to:
transmit information about a rewarding scheme subscribed by the sensing node to the first network function.

An advantage with this implementation form is that it is possible for a sensing node to indicate what sensing related reward scheme it is interested in for the purpose of getting rewarded for taking part in any sensing operation.

In an implementation form of a sensing node according to the third aspect, the sensing node is further configured to:
perform sensing measurements for a sensing event comprising a sensing target in a sensing area; and
transmit the sensing measurements for the sensing event to the first network function.

An advantage with this implementation form is that a chosen sensing node can be configured in terms of what sensing measurements to take and pass on to the first network function.

In an implementation form of a sensing node according to the third aspect, the sensing node is a client device or a network access node.

An advantage with this implementation form is that an existing client device or network access node can be used for any sensing operation so that a sensing operation can easily be executed within a coverage area.

According to a fourth aspect of the invention, the above mentioned and other objectives are achieved with a method for a first network function according to claim 13, the method comprises
receiving a sensing request indicating one or more sensing requirements for a sensing event, the sensing event comprising a sensing target in a sensing area;
determining a sensing type for the sensing event based on the sensing request, the sensing type involving one or more sensing nodes for the sensing event;
transmitting a service request to a second network function, the service request indicating the sensing event;
receiving a service response from the second network function, the service response indicating a first set of sensing nodes for the sensing event;
selecting a second set of sensing nodes for the sensing event from the first set of sensing nodes based on the sensing type; and
transmitting a sensing event configuration indicating the second set of sensing nodes for the sensing event.

The method according to the fourth aspect can be extended into implementation forms corresponding to the implementation forms of the first network function according to the first aspect. Hence, an implementation form of the method comprises the feature(s) of the corresponding implementation form of the first network function.

The advantages of the methods according to the fourth aspect are the same as those for the corresponding implementation forms of the first network function according to the first aspect. According to a fifth aspect of the invention, the above mentioned and other objectives are achieved with a method for a second network function according to claim 14, the method comprises
receiving a service request from a first network function, the service request indicating a sensing event, the sensing event comprising a sensing target in a sensing area;
determining a first set of sensing nodes for the sensing event based on the service request; and
transmitting a service response to the first network function, the service response indicating the first set of sensing nodes for the sensing event.

The method according to the fifth aspect can be extended into implementation forms corresponding to the implementation forms of the second network function according to the second aspect. Hence, an implementation form of the method comprises the feature(s) of the corresponding implementation form of the second network function.

The advantages of the methods according to the fifth aspect are the same as those for the corresponding implementation forms of the second network function according to the second aspect.

According to a sixth aspect of the invention, the above mentioned and other objectives are achieved with a method for a sensing node, the method comprises
transmitting information about a sensing capability and a sensing configuration of the sensing node to a first network function.

The method according to the sixth aspect can be extended into implementation forms corresponding to the implementation forms of the sensing node according to the third aspect. Hence, an implementation form of the method comprises the feature(s) of the corresponding implementation form of the sensing node.

The advantages of the methods according to the sixth aspect are the same as those for the corresponding implementation forms of the sensing node according to the third aspect.

The invention also relates to a computer program, characterized in program code, which when run by at least one processor causes said at least one processor to execute any method according to examples of the invention. Further, the invention also relates to a computer program product comprising a computer readable medium and said mentioned computer program, wherein said computer program is included in the computer readable medium, and comprises of one or more from the group: ROM (Read-Only Memory), PROM (Programmable ROM), EPROM (Erasable PROM), Flash memory, EEPROM (Electrically EPROM) and hard disk drive.

Further applications and advantages of the examples of the invention will be apparent from the following detailed description.

### BRIEF DESCRIPTION OF THE DRAWINGS

The appended drawings are intended to clarify and explain different examples of the invention, in which:
- Fig. 1 shows a first network function according to an example of the invention;
- Fig. 2 shows a flow chart of a method for a first network function according to an example of the invention;
- Fig. 3 shows a second network function according to an example of the invention;
- Fig. 4 shows a flow chart of a method for a second network function according to an example of the invention;
- Fig. 5 shows a sensing node according to an example of the invention;
- Fig. 6 shows a flow chart of a method for a sensing node according to an example of the invention;
- Figs. 7a-b show a first network function in a reference model representation and a service-based architecture representation according to examples of the invention;
- Fig. 8 shows a communication system according to an example of the invention;
- Fig. 9 shows sensing request signalling according to an example of the invention;
- Fig. 10 shows sensing result signaling according to an example of the invention;
- Fig. 11 shows sensing parameter signaling according to an example of the invention;
- Fig. 12 shows a flow chart for a method for a first network function according to an example of the invention;
- Fig. 13 shows sensing request signaling according to an example of the invention;
- Fig. 14 shows service request signaling according to an example of the invention; and
- Fig. 15 shows sensing event signaling according to an example of the invention.

### DETAILED DESCRIPTION

Given the wide-spread attention of sensing, 3GPP has been studying use cases and potential requirements for enhancing the 5G system to provide integrated communication and sensing services addressing emerging applications in a wide variety of industries, e.g., factory automation and vehicle to everything (V2X). To meet these new requirements, fundamental questions need to be answered in terms of how the 5G core network (5GC) learns about sensing capabilities and individual sensing configurations of each sensing node, e.g., a UE or a next generation NodeB (gNB), how to configure an appropriate sensing type based on a sensing request and how to respond to new sensing events.

Given that sensing is preferred in a number of applications across a wide variety of areas, sensing requirements in terms of key performance indicator (KPI) measurement, accuracies to be achieved, relative velocity between a sensing node and a sensing target can be different. This means that sensing capabilities of sensing nodes can differ depending on what sensing application or services a sensing node is associated with. This vital piece of information in terms of sensing capability would be useful to the sensing related functionality of the 5GC in order to enlist appropriate sensing nodes, configure them to take required measurements for the purpose of dealing with a given sensing requirement. Also, sensing related configuration governing how often a sensing node can take measurements while considering its energy consumption, and place and time-period of operation would be useful to the sensing functionality of the 5GC. Further, given that sensing related operation can drain a UE battery, the 5GC could advertise sensing-related rewarding schemes to encourage UE participation. Advertising of rewarding schemes would enable a UE to subscribe to an appropriate rewarding scheme and gets rewarded for taking part in sensing related activities. It would also be beneficial to provide holistic ways for the 5GC to get sensing requests, e.g., from 3rd parties, have such sensing requests policy authorized, decide what type of sensing types to be employed, identify appropriate sensing nodes that can be used in a given sensing operation based on their sensing capabilities and sensing configurations, get measurements collected and processed before passing sensing related results back on to the original requester.

According to examples of the invention a framework for management of sensing operations is therefore provided and a new network function providing sensing functionality is introduced, i.e., a first network function 100.

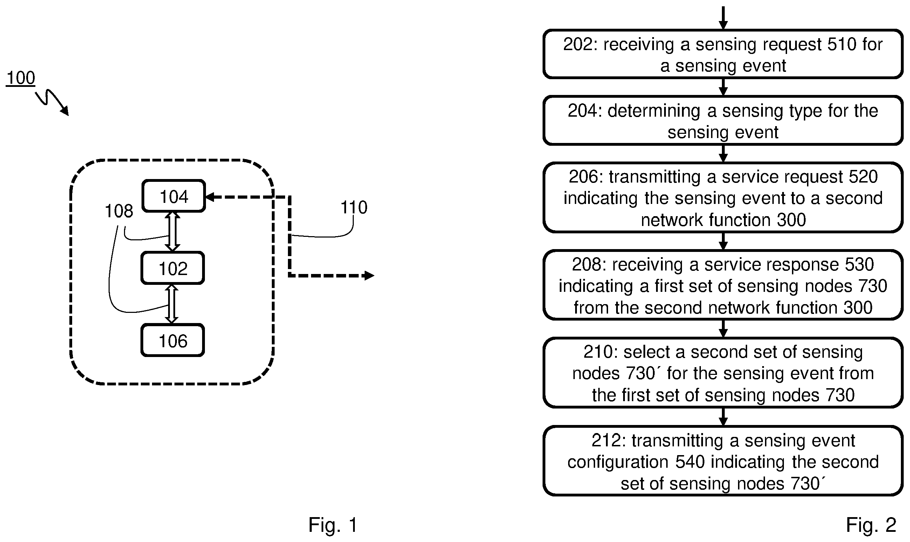

Fig. 1 shows the first network function 100 according to an example of the invention. In the example shown in Fig. 1, the first network function 100 comprises a processor 102, a transceiver 104 and a memory 106. The processor 102 is coupled to the transceiver 104 and the memory 106 by communication means 108 known in the art. The first network function 100 may be configured for communications in a communication system over a communication interface 110 coupled to the transceiver 104.

That the first network function 100 is configured to perform certain actions can in this invention be understood to mean that the first network function 100 comprises suitable means, such as e.g., the processor 102 and the transceiver 104, configured to perform said actions.

According to examples of the invention the first network function 100 is configured to receive a sensing request 510 indicating one or more sensing requirements for a sensing event, the sensing event comprising a sensing target 710 in a sensing area 720. The first network function 100 is further configured to determine a sensing type for the sensing event based on the sensing request 510, the sensing type involving one or more sensing nodes 730 for the sensing event. Furthermore, the first network function 100 is configured to transmit a service request 520 to a second network function 300, the service request 520 indicating the sensing event; and receive a service response 530 from the second network function 300, the service response 530 indicating a first set of sensing nodes 730' for the sensing event. The first network function 100 is further configured to select a second set of sensing nodes 730" for the sensing event from the first set of sensing nodes 730' based on the sensing type; and transmit a sensing event configuration 540 indicating the second set of sensing nodes 730" for the sensing event.

Furthermore, in an example of the invention, the first network function 100 for a communication system 500 comprises a transceiver and a processor configured to: receive a sensing request 510 indicating one or more sensing requirements for a sensing event, the sensing event comprising a sensing target 710 in a sensing area 720; determine a sensing type for the sensing event based on the sensing request 510, the sensing type involving one or more sensing nodes 730 for the sensing event; transmit a service request 520 to a second network function 300, the service request 520 indicating the sensing event; receive a service response 530 from the second network function 300, the service response 530 indicating a first set of sensing nodes 730' for the sensing event; select a second set of sensing nodes 730" for the sensing event from the first set of sensing nodes 730' based on the sensing type; and transmit a sensing event configuration 540 indicating the second set of sensing nodes 730" for the sensing event.

Moreover, in yet another example of the invention, the first network function 100 for a communication system 500 comprises a processor and a memory having computer readable instructions stored thereon which, when executed by the processor, cause the processor to: receive a sensing request 510 indicating one or more sensing requirements for a sensing event, the sensing event comprising a sensing target 710 in a sensing area 720; determine a sensing type for the sensing event based on the sensing request 510, the sensing type involving one or more sensing nodes 730 for the sensing event; transmit a service request 520 to a second network function 300, the service request 520 indicating the sensing event; receive a service response 530 from the second network function 300, the service response 530 indicating a first set of sensing nodes 730' for the sensing event; select a second set of sensing nodes 730" for the sensing event from the first set of sensing nodes 730' based on the sensing type; and transmit a sensing event configuration 540 indicating the second set of sensing nodes 730" for the sensing event.

Fig. 2 shows a flow chart of a corresponding method 200 which may be executed in a first network function 100, such as the one shown in Fig. 1. The method 200 comprises receiving 202 a sensing request 510 indicating one or more sensing requirements for a sensing event, the sensing event comprising a sensing target 710 in a sensing area 720. The method 200 further comprises determining 204 a sensing type for the sensing event based on the sensing request 510, the sensing type involving one or more sensing nodes 730 for the sensing event. Furthermore, the method 200 comprises transmitting 206 a service request 520 to a second network function 300, the service request 520 indicating the sensing event; and receiving 208 a service response 530 from the second network function 300, the service response 530 indicating a first set of sensing nodes 730' for the sensing event. The method 200 further comprises selecting 210 a second set of sensing nodes 730" for the sensing event from the first set of sensing nodes 730' based on the sensing type; and transmitting 212 a sensing event configuration 540 indicating the second set of sensing nodes 730" for the sensing event.

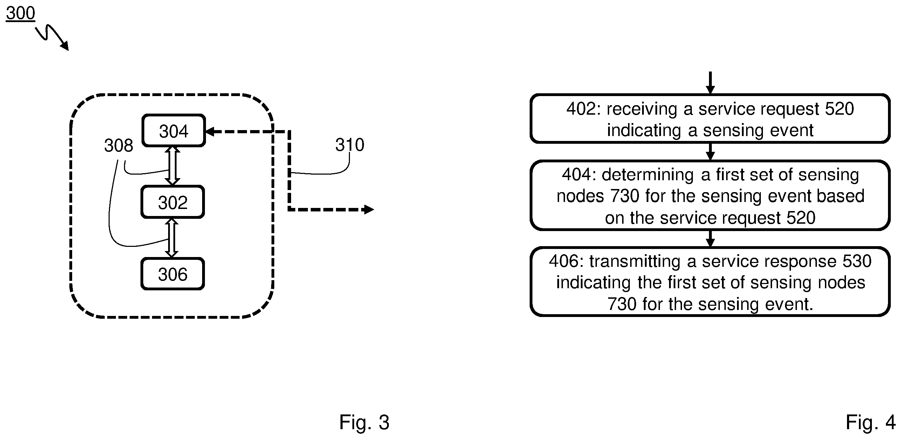

Fig. 3 shows a second network function 300 according to an example of the invention. In the example shown in Fig. 3, the second network function 300 comprises a processor 302, a transceiver 304 and a memory 306. The processor 302 is coupled to the transceiver 304 and the memory 306 by communication means 308 known in the art. The second network function 300 may be configured for communications in a communication system over a communication interface 310 coupled to the transceiver 304.

That the second network function 300 is configured to perform certain actions can in this invention be understood to mean that the second network function 300 comprises suitable means, such as e.g., the processor 302 and the transceiver 304, configured to perform said actions.

According to examples of the invention the second network function 300 is configured to receive a service request 520 from a first network function 100, the service request 520 indicating a sensing event, the sensing event comprising a sensing target 710 in a sensing area 720. The second network function 300 is further configured to determine a first set of sensing nodes 730' for the sensing event based on the service request 520; and transmit a service response 530 to the first network function 100, the service response 530 indicating the first set of sensing nodes 730' for the sensing event.

Furthermore, in an example of the invention, the second network function 300 for a communication system 500 comprises a transceiver and processor configured to: receive a service request 520 from a first network function 100, the service request 520 indicating a sensing event, the sensing event comprising a sensing target 710 in a sensing area 720; determine a first set of sensing nodes 730' for the sensing event based on the service request 520; and transmit a service response 530 to the first network function 100, the service response 530 indicating the first set of sensing nodes 730' for the sensing event.

Moreover, in yet another example of the invention, the second network function 300 for a communication system 500 comprises a processor and a memory having computer readable instructions stored thereon which, when executed by the processor, cause the processor to: receive a service request 520 from a first network function 100, the service request 520 indicating a sensing event, the sensing event comprising a sensing target 710 in a sensing area 720; determine a first set of sensing nodes 730' for the sensing event based on the service request 520; and transmit a service response 530 to the first network function 100, the service response 530 indicating the first set of sensing nodes 730' for the sensing event.

Fig. 4 shows a flow chart of a corresponding method 400 which may be executed in a second network function 300, such as the one shown in Fig. 3. The method 400 comprises receiving 402 a service request 520 from a first network function 100, the service request 520 indicating a sensing event, the sensing event comprising a sensing target 710 in a sensing area 720. The method 400 further comprises determining 404 a first set of sensing nodes 730' for the sensing event based on the service request 520; and transmitting 406 a service response 530 to the first network function 100, the service response 530 indicating the first set of sensing nodes 730' for the sensing event.

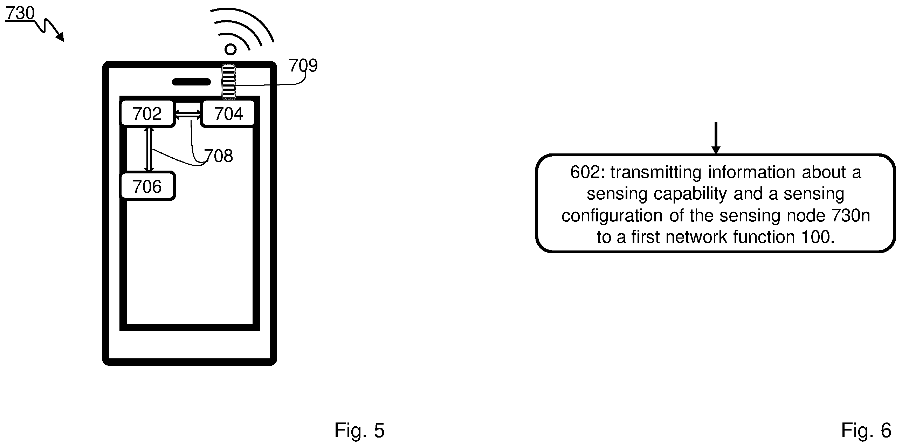

Fig. 5 shows a sensing node 730 according to an example of the invention where the sensing node 730 is a client device such as e.g., a UE. However, the sensing node 730 is not limited thereto and may in examples instead be a network access node, such as e.g., a gNB. In the example shown in Fig. 5, the sensing node 730 comprises a processor 702, a transceiver 704 and a memory 706. The processor 702 is coupled to the transceiver 704 and the memory 706 by communication means 708 known in the art. The sensing node 730 further comprises an antenna or antenna array 709 coupled to the transceiver 704, which means that the sensing node 730 is configured for wireless communications in a communication system.

That the sensing node 730 is configured to perform certain actions can in this invention be understood to mean that the sensing node 730 comprises suitable means, such as e.g., the processor 702 and the transceiver 704, configured to perform said actions.

According to examples of the invention the sensing node 730 is configured to transmit information about a sensing capability and a sensing configuration of the sensing node 730 to the first network function 100.

Furthermore, in an example of the invention, the sensing node 730 for a communication system 500 comprises a transceiver/processor configured to: transmit information about a sensing capability and a sensing configuration of the sensing node 730 to the first network function 100.

Moreover, in yet another example of the invention, the sensing node 730 for a communication system 500 comprises a processor and a memory having computer readable instructions stored thereon which, when executed by the processor, cause the processor to: transmit information about a sensing capability and a sensing configuration of the sensing node 730 to the first network function 100.

Fig. 6 shows a flow chart of a corresponding method 600 which may be executed in a sensing node 730, such as the one shown in Fig. 5. The method 600 comprises transmitting 602 information about a sensing capability and a sensing configuration of the sensing node 730 to the first network function 100.

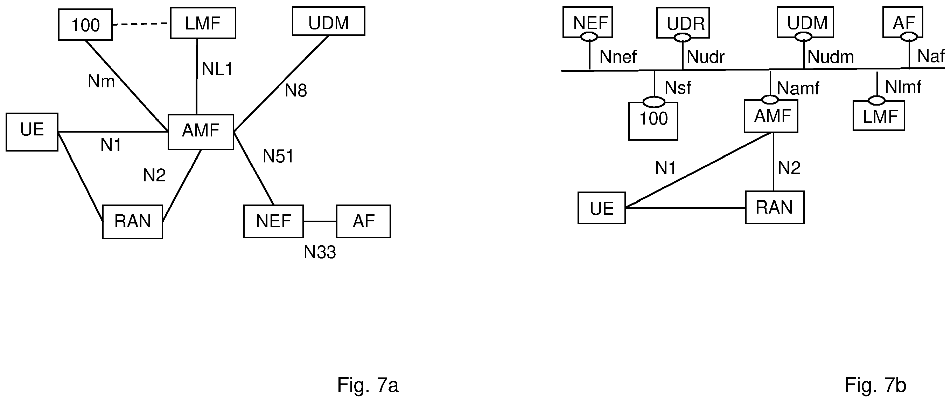

The first network function 100 may also be denoted a sensing function and may be implemented as network function in a core network such as e.g., a 5GC. Figs. 7a-b show examples of the first network function 100 in a 5GC architecture context according to the 3GPP standard TS 23.273, where Fig. 7a is reference model representation of the 5GC architecture and Fig. 7b is a service-based architecture representation of the 5GC architecture. In Figs. 7a-b, the first network function 100 has been added to the 5GC architecture shown in figure 4.2.1-1 and figure 4.2.1-2, respectively, in TS 23.273 to indicate possible positions and interfaces of first network function 100 relative to the other network functions in the 5GC architecture. With reference to Fig. 7a, the first network function 100 may interact with an access and mobility management function (AMF) via an interface Nm and with a location management function (LMF) directly or via the AMF. With reference to Fig. 7b, the first network function 100 may use an interface Nsf for service-based interaction with the other network functions, see figure 4.2.1-1 and figure 4.2.1-2 and associated description in TS 23.273 for more details about the other network functions.

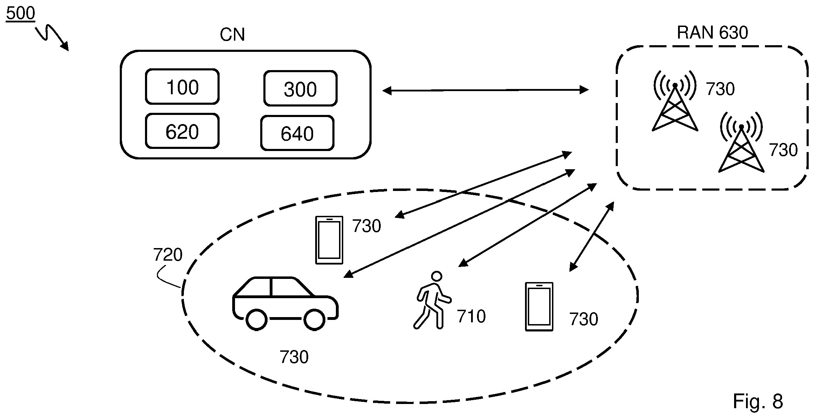

Fig. 8 shows a communication system 500 according to an example of the invention. The communication system 500 may also be denoted an integrated sensing and communication system. In the shown example, the first network function 100 and the second network 300 are comprised in a core network CN of the communication system. The first network function 100 may be implemented as a stand-alone network function or network node or be implemented as a part of an existing network function such as e.g., a network data analytics function (NWDAF) 640, a location management function (LMF) 300, or an access and mobility management function (AMF) 620. In a similar way, the second network function 300 may be implemented as a stand-alone network function or network node or be implemented as a part of the LMF 300. The communication system further comprises a number of sensing nodes 730. With reference to Fig. 8, the sensing nodes 730 may be client devices such as e.g., UEs or network access nodes such as e.g., a gNB located in a radio access network (RAN) 630.

According to examples of the invention the first network function 100 is configured to identify sensing nodes 730 to be used for a sensing event for a sensing target 710 in a sensing area 720. In the show example, the sensing target 710 is a person e.g., a pedestrian. However, the sensing target 710 may be any type of object including but not limited to a human, an animal, a vehicle, a tree, a structure, a substance such as e.g., water or a chemical, etc., see also Table 4 below. The sensing target 710 may or may not be associated with a UE which in turn may or may not be a sensing node 730. The first network function 100 determines an appropriate sensing type to be used for the sensing event based on sensing requirements for the sensing event and interacts with the second network function 300 to identify sensing nodes 730 suitable to support the sensing event. Suitable sensing nodes 730 may e.g., be sensing nodes 730 having necessary sensing capabilities meeting the sensing requirements of the sensing event and being within a certain range or relative speed of the sensing target 710.

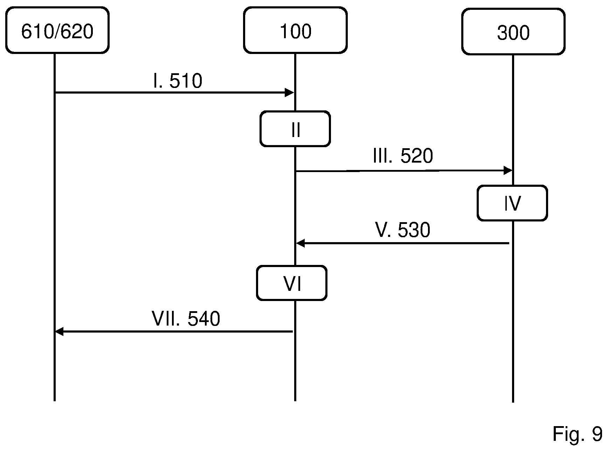

Further details of the functions of the first network function 100 and its interaction with other functions and nodes will now be described with reference to Fig. 9 to 15.

Fig. 9 shows signaling from and to the first network function 100 for sensing operations according to an example of the invention. As described above, the first network function 100 may in examples be a part of a NWDAF 640, a LMF 300, or an AMF 620.

In step I in Fig. 9, the first network function 100 receives a sensing request 510 indicating one or more sensing requirements for a sensing event, the sensing event comprising a sensing target 710 in a sensing area 720. In the shown example, the first network function 100 receives the sensing request 510 from an application function (AF) 610 or an AMF 620 but the invention is not limited thereto.

The one or more sensing requirements may comprise one or more KPIs, i.e., the one or more sensing requirements may be represented in terms of KPIs. The KPIs may be associated with: a horizontal accuracy/resolution, a vertical accuracy/resolution, an orientation accuracy/ resolution, and a velocity accuracy/resolution for the sensing event. These and other possible KPIs are listed below in Table 1 along with a brief description of each KPI. A sensing requirement may consist of one or many of the KPIs listed in Table 1.

**Table 1**

| **KPI name** | **KPI Description** |
|---|---|
| Horizontal accuracy | Error value corresponding to a certain percentile (e.g., 90%, 99%) or the root mean squared value of the location error parallel to the earth surface |
| Vertical accuracy | Error value corresponding to a certain percentile (e.g., 90%, 99%) or the root mean squared value of the location error perpendicular to the earth surface |
| Orientation accuracy | Error value corresponding to a certain percentile (e.g., 90%, 99%) or the root mean squared value of the orientation error in a global frame of reference |
| Range accuracy | Error value corresponding to a certain percentile (e.g., 90%, 99%) or the root mean squared value of the ranging (distance estimation) error |
| Velocity accuracy | Error value corresponding to a certain percentile (e.g., 90%, 99%) or the root mean squared value of the (relative) velocity error |
| Angular accuracy | Error value corresponding to a certain percentile (e.g., 90%, 99%) or the root mean squared value of the (relative) angle error (arrival and/or departure, azimuth and elevation), within the local frame of reference |
| Range resolution | Minimum difference in distance between targets to have measurably different range. Equivalent to delay resolution |
| Velocity resolution | Minimum difference in velocity between targets to have measurably different velocity. Equivalent to Doppler resolution |
| Angular resolution | Minimum difference in angle between targets to have measurably different angle |
| Link range | Maximum distance at which an object can be located unambiguously with a certain probability of detection during sensing |
| Velocity range | Maximum range of velocities to be measured |
| Angular velocity | Rate of change of the orientation of a mobile device, relative to an external frame of reference |
| Agility | Acceleration (m/s^2), jerk (m/s^3), angular acceleration (rad/s^2) of target |
| Latency | End-to-end localisation/sensing latency. The duration between an application or a network function requesting location and obtaining the results. Includes the physical layer latency |
| Update rate / reporting rate | Number of consecutive localisation/sensing estimates per unit time (at most once per latency). |
| Availability | Fraction of the time the estimated localisation error is below the alert limit (for 1 device). |
| Integrity | Fraction of the time the true error is outside of estimate of maximum possible error (for 1 device). |
| Precision score | The ratio of correctly predicted positive observations to the total predicted positive observations |
| Scalability | Capability to use a technique by an increasing or decreasing number user equipment (UEs) or transmit points (TRPs), given that those nodes are in coverage |

Based on the sensing request 510, the first network function 100 determines a sensing type for the sensing event in step II in Fig. 9. The sensing type involves one or more sensing nodes 730 for the sensing event. The first network function 100 may e.g., based on the one or more sensing requirements indicated in the sensing request 510 determine an appropriate sensing type to use. The sensing type may e.g., be monostatic, bistatic and multistatic. Monostatic sensing is where a transmitter and a receiver are collocated in the same sensing node 730 often possessing a full-duplex capability. For monostatic sensing, the transmitted signals do not need be pilot signals, as the transmitter and receiver are co-located. However, a high degree of isolation between the transmitter and receiver is desirable to overcome the self-interference and typically the transceivers need to operate in full-duplex mode. On the other hand, in bistatic or multi-static sensing, the transmitter and receiver are physically separated and often involve two sensing nodes 730 in the case of bistatic sensing or more than two sensing nodes 730 in the case of multistatic sensing. There is hence no need for further isolation between the transmitter and receiver, leading to cost-effective transceiver hardware.

In step III in Fig. 9, the first network function 100 transmits a service request 520 to a second network function 300, the service request 520 indicating the sensing event. The service request 520 may be transmitted to obtain a first set of sensing nodes 730' for the sensing event, where the first set of sensing nodes 730' are sensing nodes 730 which can be used to support the sensing event.

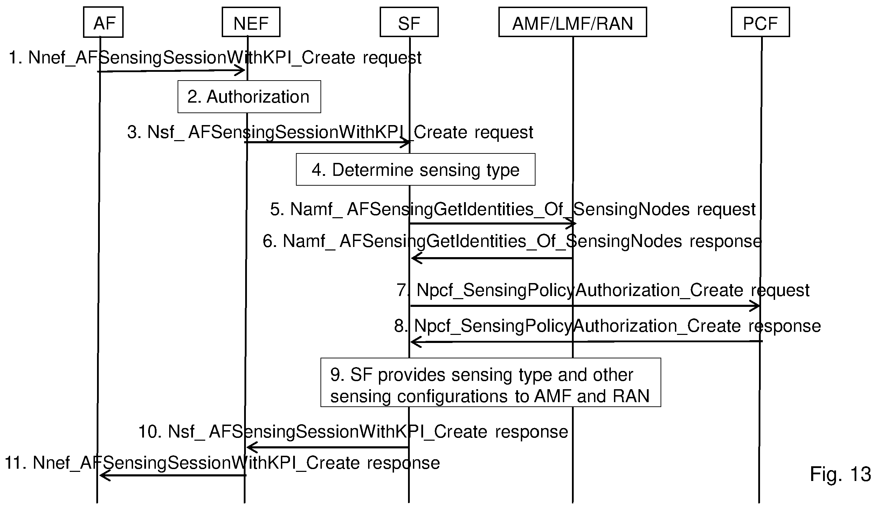

In examples, the first network function 100 may perform an authorization procedure pre-step before transmitting the service request 520 (not shown in Fig. 9). The authorization procedure is described with reference to Fig. 13 and may be performed to enable sensing rule authorization by a policy and control function (PCF) that deals with a selection of appropriate sensing KPIs to a sensing event based on a sensing request. The authorization procedure may comprise the first network function 100 transmitting an authorization request 570 indicating the sensing request 510 prior to transmitting the service request 520. The first network function 100 may then transmit the service request 520 upon receiving a positive authorization response 580. The authorization response 580 indicating an authorization of the sensing request 510.

The second network function 300 receives the service request 520 indicating the sensing event from the first network function 100. The sensing event comprises the sensing target 710 in the sensing area 720. In examples, the second network function 300 is a LMF but the second network function 300 may be any network function storing or having access to information about locations of sensing nodes 730.

Based on the service request 520, the second network function 300 determine a first set of sensing nodes 730' for the sensing event in step IV in Fig. 9. The first set of sensing nodes 730' may be sensing nodes 730 located close to the sensing target 710, e.g., located within a range of the sensing target 710 and/or located in the sensing area 720.

In examples, the service request 520 further indicates at least one of: a geographical coordinate of the sensing target 710, a maximum sensing range with respect to the sensing target 710, and a maximum allowed relative speed of a sensing node 730 with respect to the sensing target 710. In this case, the second network function 300 may use this additional information when determining the first set of sensing nodes 730' in step IV in Fig. 9.

In step V in Fig. 9, the second network function 100 transmits a service response 530 to the first network function 100. The service response 530 indicates the first set of sensing nodes 730' for the sensing event. In examples, the service response 530 indicates an identity for each sensing node 730 in the first set of sensing nodes 730', i.e., the first set of sensing nodes 730' may be indicated by their respective identity, e.g., subscription permanent identifier (SUPI), international mobile subscriber identity (IMSI), permanent equipment identifier (PEI).

In response to the service request 520 transmitted in step III in Fig. 9, the first network function 100 hence receives the service response 530 from the second network function 300. The service response 530 indicates the first set of sensing nodes 730' for the sensing event determined by the second network function 100 and may further indicate an identity for each sensing node 730 in the first set of sensing nodes 730'. The service response 530 hence comprises information from which the first network function 100 can identify each sensing node 730 in the first set of sensing nodes 730'.

In step VI in Fig. 9, the first network function 100 selects a second set of sensing nodes 730" for the sensing event from the first set of sensing nodes 730' based on the sensing type. Based on the sensing type, the first network function 100 may hence from the first set of sensing nodes 730' select suitable sensing nodes 730 for the sensing events. To select suitable sensing nodes 730, the first network function 100 may check sensing capability and sensing configuration of the sensing nodes 730 in the first set of sensing nodes 730'. In examples, the first network function 100 may hence select the second set of sensing nodes 730" from the first set of sensing nodes 730' further based on a sensing capability and a sensing configuration of each sensing node 730 in the first set of sensing nodes 730'.

The first network function 100 may receive information about the sensing capability and the sensing configuration of a sensing node 730 from the sensing node 730 itself or an application function 610 associated with the sensing node 730. Thus, the sensing node 730 may be configured to transmit information about a sensing capability and a sensing configuration of the sensing node 730 to the first network function 100. The first network function 100 may store all received information about sensing capability and sensing configuration of the sensing nodes 730.

In examples of the invention, the first network function 100 may further store dictionary entries corresponding to public land mobile network (PLMN)-assigned or manufacturer-assigned UE sensing capability IDs, as well as lists of allowed PLMN-IDs, network identifiers (NIDs), closed access group (CAG) IDs, tracking area identifiers (TAls), cell IDs and/or geographic locations where a sensing node 730 is allowed to perform sensing operations, see also Table 2 below.

The sensing capability may comprise one or more of: a supported sensing type, a supported sensing method, a supported sensing hardware, a supported sensing software, and supported sensing measurements. Examples of sensing types a sensing node 730 may support are e.g., monostatic, bistatic and multistatic. The sensing method stipulates how sensing information is derived, e.g., by comparing a received signal against a transmitted signal or by analysing the change history of phase and amplitude of the received signal. Examples of sensing methods a sensing node 730 may support are time of flight (TOF) or phase and amplitude change (PAC). In TOF, sensing information is derived based on comparing echo with a transmitted signal whereas in PAC, it is based on analysing phase amplitude change with time. Sensing hardware may be related to e.g., antenna arrangements and sensors. Different sensing hardware may be required to take fast and timely measurements, e.g., magnetic susceptibility may require inductive antennas, whereas permittivity may require capacitive antennas. Sensing software may be related to e.g., KPI accuracies achievable per sensing capability. The supported sensing measurements may indicate different types of sensing measurements a sensing node 730 can perform, e.g., frequency scanning spectroscopy.

The sensing configuration may comprise one or more of: a sensing activation time period, a sensing rate, and the sensing area. The sensing configuration may hence provide information about time duration and reporting rates for sensing and may e.g., indicate supported reporting rate per location and time duration. These are additional settings made, for instance, to save energy of a sensing node 730 or to control sensing-related interferences.

The first network function 100 may further select the second set of sensing nodes 730" from the first set of sensing nodes 730' based on a sensing method which indicates a method for deriving a sensing result for the sensing event based on sensing measurements. As described above the, the sensing method may e.g., be TOF or PAC. In examples, the first network function 100 determines a sensing method for the sensing event based on the sensing request 510 and selects the second set of sensing nodes 730" further based on the sensing method.

Step VI in Fig. 9 may hence comprise the first network function 100 selecting the second set of sensing nodes 730" for the sensing event by identifying sensing nodes 730 in the first set of sensing nodes 730' supporting the determined sensing method and having the sensing capability and sensing configuration to meet the one or more sensing requirements of the sensing event. The first network function 100 may e.g., select sensing nodes 730 with a reporting rate meeting the required sensing accuracies of a sensing request 510.

The first network function 100 then transmits a sensing event configuration 540 indicating the identities of the second set of sensing nodes 730" for the sensing event, as shown in step VII in Fig. 9. The sensing event configuration 540 is transmitted in response to the sensing request 510. The first network function 100 may transmit the sensing event configuration 540 to a radio access network (RAN) 630 via an AMF 620. In Fig. 7, only the first leg to the AMF 620 of the transmission is shown.

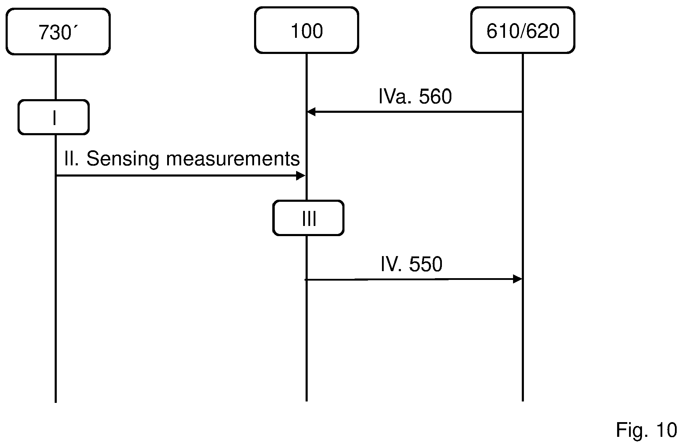

According to examples of the invention the first network function 100 is further configured to collect and process sensing related measurements and to notify a sensing requester when a given sensing event has taken place. Fig. 10 shows signaling for exchange of sensing measurements and results of sensing events according to an example of the invention where the second set of sensing nodes 730" has been configured to perform sensing measurements.

In step I in Fig. 10, each sensing node 730 in the second set of sensing nodes 730" performs sensing measurements for a sensing event comprising a sensing target 710 in a sensing area 720. The second set of sensing nodes 730" may be configured by a RAN 630 to perform sensing measurements based on configuration details passed on by the first network function 100. Each sensing node 730 may be a client device or a network access node.

In step II in Fig. 10, sensing nodes 730 in the second set of sensing nodes 730‴ transmit the sensing measurements for the sensing event to the first network function 100. The first network function 100 receives the sensing measurements from the second set of sensing nodes 730" and based on the sensing measurements, the sensing type and the sensing method, the first network function 100 determines a sensing result for the sensing event in step III in Fig. 10. The first network function 100 may process the sensing measurements to determine the sensing results and/or get sensing measurements processed by an external entity and get corresponding sensing results.

Thus, the first network function 100 determines that the sensing event has occurred based on the sensing result and transmit a sensing notification 550 indicating that the sensing event has occurred in step IV in Fig. 10. The sensing notification 550 may be transmitted to a network function or a network node which have subscribed to sensing notifications. In the shown example, it is assumed that the first network function 100 has received a sensing event subscription request 560 from an AF 610 or an AMF 620, as shown in step IVa in Fig. 10. The sensing event subscription request 560 is received prior to the first network function 100 determining the sensing result for the sensing event in step III in Fig. 10. Based on the sensing event subscription, the first network function 100 hence transmits the sensing notification 550 to the AF 610 or the AMF 620.

In examples of the invention, the sensing node 730 may further transmit information about a rewarding scheme subscribed by the sensing node 730 to the first network function 100. The first network function 100 may store the received information about the reward scheme subscribed by the sensing node 730. In this way, the first network function 100 have access to and can obtain the reward scheme that the sensing node 730 has subscribed to and may in cooperation with a charging function (CHF) or other appropriate network function to reward the sensing node 730 for taking part in the sensing event. The first network function 100 may maintain up-to-date reward status in terms of amount of credit balance per sensing node 730.

The available rewarding schemes may be broadcasted or passed onto the sensing node 730 using dedicated signalling. On learning the available types of rewarding schemes, the sensing node 730 may subscribe to a desired rewarding scheme e.g., as part of a registration request procedure.

Further details related to sensing procedures according to the invention will now be described in a 3GPP 5G context with reference to Figs. 10 to 15. The first network function 100 according to the invention may in the scenarios below be configured to perform any of the described functions of the sensing function (SF), i.e., the new network function according to the invention. In a similar way, the second network function 300 according to the invention may in the scenarios below be configured to perform any of the described functions of a 3GPP LMF.

A UE being a sensing node 730 can use 5G mobility management (5GMM) during a registration request to indicates its sensing capability and sensing configuration. Alternatively, the UE 730 can indicate its sensing capability and sensing configuration as part of 5G session management (5GSM) during a protocol data unit (PDU) session establishment procedure. As part of 5GMM or 5GSM, the UE 730 may also indicate its sensing configuration related to preferred sensing-related refresh or sampling rate, desired locations and times of a sensing operation. The AMF 620 may store UE 730 sensing capability and sensing configuration as part of a 5GMM context. The first network function 100 acting as a SF 100 may keep this information for deciding on appropriate sensing type and accuracies that are possible per sensing capability ID. The SF 100 may store dictionary entries corresponding to either PLMN-assigned or manufacturer-assigned UE sensing capability IDs. This is analogous to the way UE radio capability ID is used by the 5G system. The AMF 620 may subscribe to the SF 100 for the purpose of obtaining details of UE sensing capability ID that the SF 100 assigns for the purpose of caching them locally.

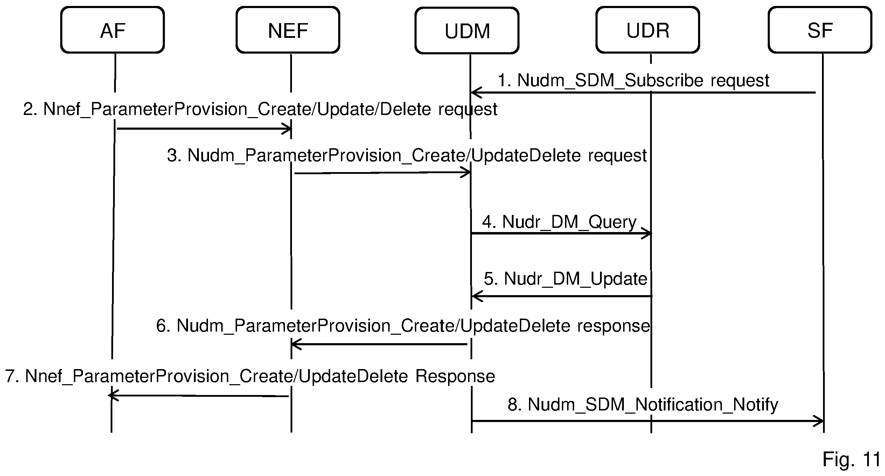

Provisioning of UE sensing capability or capability IDs can be carried out by an AF 610 on behalf of one or more UEs 730, as shown in Fig. 11. This can reduce control signalling as UEs 730 do not have to individually indicate their sensing capability. This is especially true when UEs 730 belong to a factory or car original equipment manufacturer (OEM). Accordingly, the Nnef_ParameterProvision_Create/Update/Delete request/response operations may be extended according to examples of the invention as will now be described with reference to Fig. 11.

In step 1 in Fig. 11, any NF such as an AMF 620 or SF 100 subscribes to unified data management (UDM) notifications of UE sensing capability or capability IDs or sensing configuration of UEs 730 along with their identities, e.g., SUPI using a Nudm_SDM_Subscribe request indicating sensing capability change for a single or group of UEs 730. Similarly, an NF can subscribe to a UDM to get notified of any parameter change that is related to UE sensing capabilities of UEs 730. It may be noted that the NF can subscribe to UDM in this step for any notification that will be triggered in step 8 in Fig. 11 upon detecting any changes to UE sensing capability or capability IDs or sensing configuration of UEs 730.

In step 2 in Fig. 11, the AF 610 transmits a Nnef_ParameterProvision_Create/Update/Delete request include manufacture-based sensing ID, details per international mobile equipment identity (IEMI)/tracking area code (TAC) or generic public subscription identifier (GPSI), to the NEF. Thus, the AF 610 provides UE sensing capabilities or capability IDs or sensing configuration of one or more UEs 730 along with their respective identities, e.g., GPSI. The transaction reference ID identifies the transaction request between the NEF and the AF 610. The NEF checks whether the requestor is allowed to perform the requested service operation by checking requestor's identifier, i.e., the AF ID.

If the AF 610 is authorised by the NEF to provision the parameters, the NEF requests to create, update and store, or delete the provisioned parameters as part of expected UE behaviour parameters or new type of sensing parameters in step 3 in Fig. 11, by transmitting a Nudm_ParameterProvision_Create/Update/Delete request message to the UDM, the request indicates the provisioned data and NEF reference ID. The expected UE behavioural information may be extended to include sensing capability and sensing configuration in addition to consisting of information on expected UE movement and communication characteristics or sensing parameters.

If the AF 610 is not authorised to provision the parameters, then the NEF will respond to the AF 610 with a Nnef_ParameterProvision_Create/Update/Delete response indicating a failure in step 7 in Fig. 11, the response may further indicate the reason for the failure. Step 8 in Fig. 11 is not performed in this case.

In step 4 in Fig. 11, the UDM may read from the unified data repository (UDR) using a Nudr_DM_Query, corresponding subscription information in order to validate required data updates and authorize these changes for the expected UE behaviour or sensing parameters related data.

In step 5 in Fig. 11, if the AF is authorised by the UDM to provision expected UE behaviour or sensing parameters related data, the UDM resolves the GPSI to SUPI for each UE 730, and requests to create, update or delete the provisioned parameters as part of expected UE behaviour or sensing parameters related data using a Nudr_DM_Create/Update/Delete request indicating the provisioned data. The UDR stores the provisioned data as part of expected UE behaviour or sensing parameters related data and further responds with a Nudr_DM_Create/Update/Delete to the UDM.

When the expected UE behaviour or sensing parameters related data is updated, the UDR may notify each subscribed AMF 620 or SF 100 by sending Nudr_DM_Notify.

In step 6 in Fig. 11, the UDM responds to the request from the NEF by transmitting a Nudm_ParameterProvision_Create/Update/Delete response to the NEF. If the procedure failed, the cause value indicates the reason.

In step 7 in Fig. 11, the NEF responds to the request from the AF 610 by transmitting a Nnef_ParameterProvision_Create/Update/Delete response to the AF 610. If the procedure failed, the cause value indicates the reason.

In step 8 in Fig. 11, which is a conditional step only occurring after successful step 5, the UDM notifies the subscribed NF, e.g., the SF 100, of the updated expected UE behaviour or sensing parameters related data using a Nudm_SDM_Notification Notify.

As shown in Fig. 11, provisioning of manufacturer-assigned UE sensing capability ID entries in the SF 100 is made by the AF 610 that interacts with the SF 100 either directly or with a help of the NEF. Alternatively, the SF 100 can assign UE sensing capability ID based on sensing capability and sensing configuration details obtained. In order to avoid transmission of large amount of sensing-related data that would otherwise incur whenever a UE changes its connection state, e.g., from CM-IDLE to CM-CONNECTED, the AMF 620 or SF 100 may store the UE sensing capability information during CM-IDLE state for the UE 730 and RM-REGISTERED state for the UE 730 and the AMF 620 or SF 100 may if it is available, send its most up to date UE sensing capability information to the RAN 630 in a N2 REQUEST.

The RAN 630 will use NG setup or RAN configuration update procedure to notify its sensing capability and sensing configuration details to the AMF 620. Sensing capability or sensing configuration include especially frequency ranges, e.g., FR1, FR2, etc. of operation, sampling or refresh rate, waveform or numerology to be used, downlink positioning reference signal (DL-PRS) details, range or location and time of operation. The AMF 620 may subsequently pass sensing capability and sensing configuration details on to the SF 100 for further storing. Such sensing capability and sensing configuration information can be helpful in determining radio frequency compatible gNBs and UEs 730 for bistatic and/or multistatic sensing operations.

Table 2 and Table 3 show examples of sensing related context information that may be stored by the AMF 620 and the SF 100, respectively, per sensing node 730, e.g., UE or gNB. Based on the sensing related context information, the AMF 620 or SF 100 may control where a sensing node 730 is allowed to be involved in taking sensing-related measurements. This may consider PLMN IDs, NIDs identifying stand-alone non-public networks (SNPNs), CAG identifiers, lists of TAls, list of cells or absolute geographical locations. Table 2 show examples of additional elements of AMF 620 access and mobility related policy information for sensing.

**Table 2**

| **Information name** | | **Description** |
|---|---|---|
| **Sensing Area Restrictions** | | **This part defines Sensing related restrictions** |
| | List of Allowed PLMN-IDs, NIDs, CAG-IDs | List of allowed public network integrated (PNI) - non-public network (NPN) Ids, SNPN Ids (e.g., NID), PLMN-IDs |
| | List of allowed TAls | List of allowed areas |
| | Preferred Rewarding Scheme and current reward | UE preferred rewarding scheme chosen out of what has been broadcast by the 5GC on system information |

Table 3 shows examples of sensing capability and sensing configuration information maintained by the SF 100. This information can be useful for the SF 100 to decide the sensing type, e.g., monostatic, bistatic or multistatic, and/or the sensing method, e.g., TOF or PAC, to be used along with UE sensing capability and sensing configuration that may be relevant for a given sensing request 510.

**Table 3**

| **Information name** | | | **Description** |
|---|---|---|---|
| **Sensing Capability** | | | **This is to identify sensing capabilities of a UE or gNB** |
| | UE or gNB ID | | Identity of a UE or gNB |
| | Sensing Capability ID | | This is to uniquely identify sensing capability |
| | Type of Antennas | | Inductive or capacitive |
| | Sensing type supported | | Mono/Bi/Multi-static - monostatic may be challenging for UEs |
| | List of possible measurements that can be taken | | List of possible measurements that can be taken - please refer to Table 3 |
| | Sensing Method Supported | | ToF, PAC, etc |
| | frequency scanning spectroscopy | | Whether spectroscopy is supported per different frequencies |
| | Gesture detection | | Whether gesture detection is supported |
| | | ... | |

| **Sensing Configuration** | | | **This is to identify sensing configurations of a UE or gNB** |
|---|---|---|---|
| | Activation time-period | | Sensing is on at certain time-periods or continuously |
| | Sensing rate | | Higher sensing rate leads to greater sensing accuracy |
| | | | |

| **Sensing Reward Scheme** | | | **This is to store information related to chosen sensing reward scheme per sensing node** |
|---|---|---|---|
| | Scheme Subscribed | | Scheme subscribed |
| | Current Status | | Current credit status |

The SF 100 may together with a charging function (CHF), an AMF 620 and appropriate business logic determine and maintain current monetary status of a UE subscribed rewarding scheme.

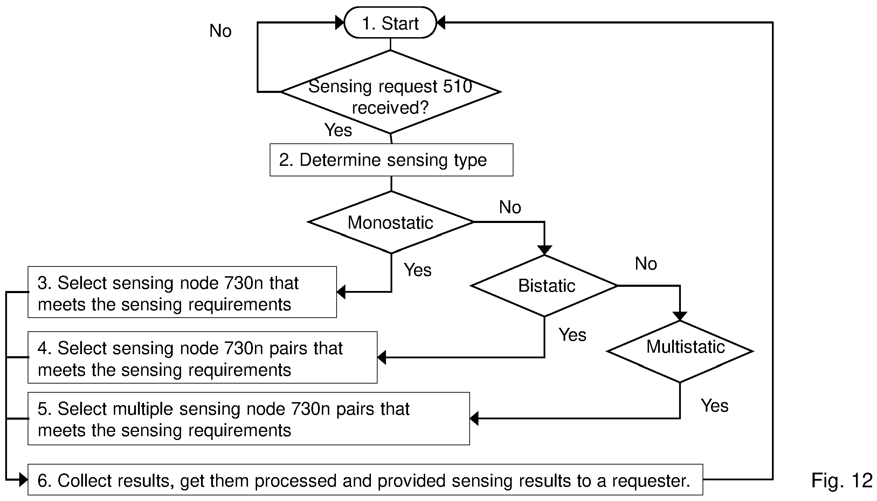

Fig. 12 shows a flow chart of a method for the SF 100 according to an example of the invention. At step 1 in Fig. 12, the SF 100 checks whether a new sensing request 510 has been received from any authorized entity, NF or any 3rd party application. If it has, the SF 100 assess sensing KPI requirements, e.g., accuracy, resolution, etc. as presented in Table 1, use case, location, time and decides on the sensing type and sensing method to be employed, in step 2 in Fig. 12. As explained earlier, the SF 100 may be configured in terms of what level of sensing accuracy of different sensing KPIs can be achieved per sensing type (e.g., monostatic, bistatic or multistatic), sensing method (e.g., TOF, PAC), capability ID or capabilities of a UE or gNB, location, time and relative velocity of a sensing node 730 and a sensing target 710. Such a configuration can also include minimum range that may be required between a sensing node 730 and a sensing target 710 to meet different KPIs of the sensing request 510. Such a configuration will help the SF 100 to decide what sensing type or sensing method to be used.

In case monostatic sensing is required, the SF 100 goes to step 3 and choose the appropriate gNB or UE 730 that meets the KPI requirements of the sensing request 510, speed restriction, and configure transmission and reception at the same chosen gNB or UE 730. In order to choose appropriate sensing nodes 730, the SF 100 may liaise with an LMF 300 or AMF 620 to identify sensing nodes 730 that are located within the range of the sensing target 710. With a new type of location service request, i.e., the service request 520, the SF 100 can get identities of UEs and gNBs 730 that are located within the maximum range of the sensing target 710. The SF 100 may further check sensing capability and sensing configuration of those identified UEs and gNBs 730 and enlist those that can meet the required KPI requirements of the sensing request 510.

If bistatic sensing type is required, the SF 100 goes to step 4 and choose appropriate pairs of gNBs or UEs 730 that meet the KPI requirements (especially within range of the sensing target 710), speed restriction of the sensing request 510 and configure one as a transmitter and the other as a receiver within a pair. The roles can be inter-changed especially at different time instances in a given location and it is possible to configure multiple transmitter-receiver pairs. Alternatively, if the SF 100 decides that multistatic sensing type is to be employed, the SF 100 goes to step 5 and choose multiple appropriate gNBs or UEs 730 that meet the KPI requirements, especially within range of a sensing target 710, speed restriction of the sensing request 510 and configure one transmitter and multiple receivers. The roles can be inter-changed especially at different time instances in a given location. There can be many transmitter and multi-receiver arrangements. The involved sensing nodes 730 may be configured for full sensing operation in terms of transmission resources to be used, sensing rate and measurements to be taken. Sensing nodes 730 may be notified in terms of identities of transmitters and receivers. The SF 100 may coordinate with the RAN 630 to make these sensing-related configurations in the RAN 630 ahead of any sensing operation. Once involved sensing nodes 730 have taken sensing measurements, the SF 100 may in step 6 in Fig. 12 collect them, get them processed internally or externally and notify the original entity or NF or 3rd party that triggered the sensing operation with a sensing notification 550 depending on configured criteria.

Fig. 13 shows the full sequence of handshakes that may take place between different NFs as part of a sensing operation according to examples of the invention.

In step 1 in Fig. 13, the AF 610 sends a request to trigger sensing operation in a given location and time-period with certain sensing KPIs by transmitting a Nnef_AFSensingSessionWithKPI _Create request message indicating use case, sensing KPI requirements, location and time-period to the NEF. The sensing KPIs may indicate what is required in terms of horizontal accuracy, vertical accuracy, orientation accuracy, velocity accuracy, angular accuracy, range accuracy, range resolution, velocity resolution, angular resolution, link range, velocity range, angular velocity, agility, latency, update/reporting rate, availability, and precision score. Further details of these KPIs are provided in relation to Table 1.

After general authorization in step 2 Fig. 13, the NEF forwards the request to the SF 100 in step 3 in Fig. 13 by transmitting a Nsf_AFSensingSessionWithKPl_ Create request indicating use case, sensing KPI requirements, location and time-period.

In step 4 in Fig. 13, based on the sensing KPI requirements, the SF 100 decides on sensing type required, e.g., monostatic, bistatic or multistatic. Depending on sensing type to be used, the SF 100 determines the number of sensing nodes 730 required along with necessary sensing capabilities.

In step 5 in Fig. 13, based on location, the SF 100 checks with AMF 620 or LMF 300 to get identities of potential sensing nodes 730 located in a given sensing geographical area by transmitting a Namf_ AFSensingGetldentities_Of_SensingNodes request indicating use case, location, time-period and minimum number of sensing nodes 730 required to the AMF 620 or the LMF 300.

In step 6 in Fig. 13, the SF 100 receives a Namf_ AFSensingGetldentities_Of_SensingNodes response from the AMF 620 or the LMF 300 indicating identities of sensing nodes 730. Upon getting the sensing node 730 identities, the SF 100 may further check which sensing nodes 730 can be useful based on sensing capability IDs, and sensing configuration, their current relative velocity in relation to the sensing target 710, the need of being located within the maximum allowed range in relation to the sensing target 710, reward scheme subscribed that match with the sensing requirements. For instance, the SF 100 may consider those sensing nodes 730 that have low relative velocity in relation the sensing target 710, e.g., no relative mobility, and that are located within the maximum allowed range in relation to the sensing target 710 to meet the sensing requirements of the sensing request 510.

In step 7 in Fig. 13, on identifying appropriate sensing nodes 730, the SF 100 transmits a Npcf_SensingPolicyAuthorization_Create request indicating AF identifier, use case, sensing KPI requirements, location, time-period and identities of sensing nodes 730 to a PCF and receives a Npcf_SensingPolicyAuthorization_Create response in step 8 in Fig. 13.

In step 9 in Fig. 13, once policy is authorized, i.e., the SF 100 have received a positive response in step 8, the SF 100 passes sensing configuration to the AMF 620 and the RAN 630 in terms of identities of sensing nodes 730 involved, sensing type to be used, sensing time period and details of what to measure and how to provide sensing measurements.

In step 10 and 11 in Fig. 13, responses to the requests in step 1 and 3, respectively, are transmitted with a Nsf_ AFSensingSessionWithKPl_Create response from the SF 100 to the NEF and with a Nnef_ AFSensingSessionWithKPl_Create response from the NEF to the AF.

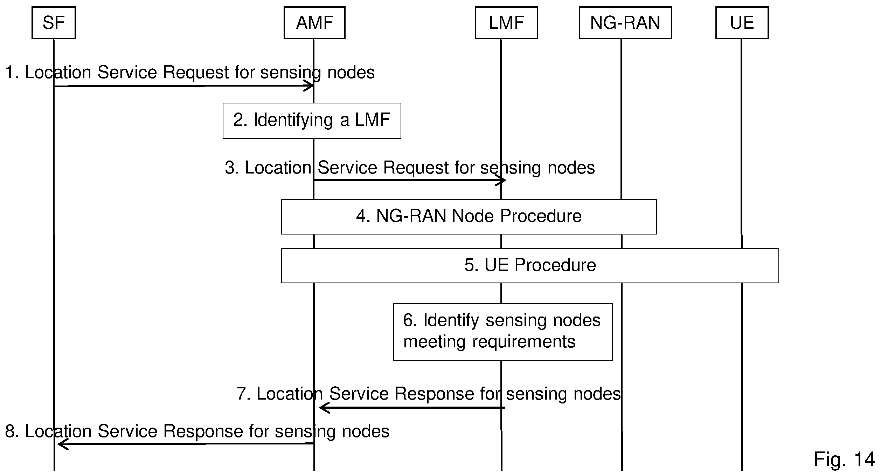

Fig. 14 shows further details related to steps 5 and 6 in Fig. 13 which is a new type of interaction with the LMF 300 compared to a conventional location service request. In the new type of location service request according to the invention, a location is input to get identities of UEs or gNBs that are located in an input location. In other words, this is different from what is specified in clause 5.2 of TS 38.305 V17.2.0. Location information of a sensing area may at least be associated with one or more of the following:
- geographical coordinates of a sensing target 710;
- the maximum range between a sensing node 730 and a sensing target 710; and
- maximum relative speed limit of a sensing node 730 candidate with respect to a sensing target 710 depending on sensing KPI requirements, e.g., whether stationary sensing nodes 730 are preferred.

In step 1 in Fig. 14, the SF 100 transmits a Location Service Request for sensing nodes indicating geographical coordinates of a sensing target 710, maximum range from the sensing target 710, speed restriction and time of operation to the AMF 620. The AMF 620 identifies an appropriate LMF 300 to handle the request in step 2 in Fig. 14 and forwards the Location Service Request for sensing nodes message to the identified LMF 300 in step 3 in Fig. 14. NG-RAN node procedures and UE procedures are then performed to collect information about sensing node 730 candidates in step 4 and 5 in Fig. 14.

In step 6 in Fig. 14, the LMF 300 determined identities of sensing nodes 730 that meet the sensing requirements set out in the request transmitted in step 1 in Fig. 14. The LMF 300 then reports the determined identities of sensing nodes 730 back to the SF 100 in a Location Service Response for sensing nodes via the AMF 620, as shown in step 7 and 8 in Fig. 14. In other words, identities of sensing nodes 730 that can take part in a given sensing operation are returned to the SF 100.

In order for an entity, NF or 3rd party application that has made a sensing request to get notified with sensing results, new sensing-related events are defined. Table 4 below indicates examples of new sensing events.

**Table 4**

| **Event** | **Detection criteria** |
|---|---|
| Intrusion of an object (e.g., human, animal, car, ...) | Network detects that an object is detected in a given geographical area and time-period. The AF 610 provides a description of an object along with sensing location and time-period |
| Rainfall detection | This is to forecast rainfall in a given location and time-period |
| Hazard warning | This is to detect whether a given substance has increased beyond a set threshold. An AF 610 provides information in terms of what this substance (e.g., flood water level) is at the time of event subscription |
| Crowd management | This is to count a number of objects in a given location. An AF 610 indicates maximum allowed object per location per time-period and a notification is generated when a number of objects has reached its maximum |
| Sleep monitoring | This is to detect sleep anomaly of a given human in a given location and time-period. An AF 610 indicates what to be monitored and when to raise an alarm - e.g., maximum number of eye blinks, roll-over, wake-ups, etc |
| Heart-rate monitoring | This is to monitor heart-rate of a human or animal. An AF 610 indicates what to be monitored and when to alert - e.g., when a heart-rate drops or exceeds a configured threshold |

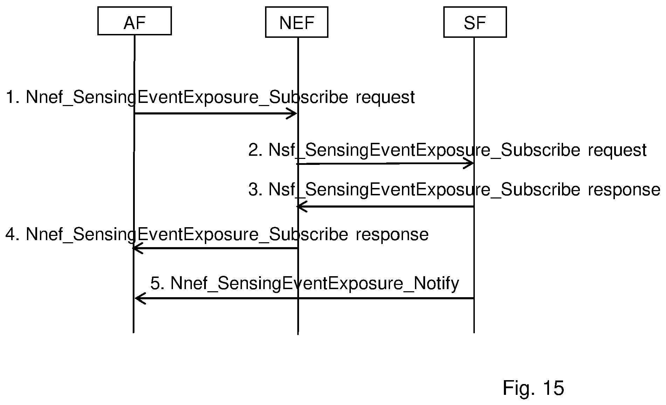

The entity, NF or 3rd party application may subscribe to one or more of the new sensing events using the signaling procedure shown in Fig. 15 which shows an example when an AF 610 subscribes to sensing events and receives a notification.

In step 1 in Fig. 15, the AF 610 subscribes to sensing events by transmitting a Nnef_SensingEventExposure_Subscribe request indicating sensing event ID, location and time period to a NEF. The NEF forwards the request with a Nsf_SensingEventExposure_ Subscribe request to the SF 100 in step 2 in Fig. 15.

In a similar way, the response to the request is transmitted from the SF 100 to the AF 610 via the NEF using a Nsf_SensingEventExposure_Subscribe response and a Nnef_SensingEventExposure_Subscribe response, respectively, as shown in step 3 and 4 in Fig. 15.

When a sensing event with an event ID which the AF 610 has subscribed to occurs, the SF 100 notifies the AF 100 by transmitting a Nnef_SensingEventExposure_Notify to the AF 610.

The first network function 100 herein may be a stand-alone network function or may be denoted as a NWDAF, a LMF or an AMF. The second network function 300 herein may be denoted as a LMF. The NWDAF, the LMF, and the AMF may be functions configured for communication in 3GPP related LTE and LTE-Advanced, in WiMAX and its evolution, and in fifth generation wireless technologies, such as new radio (NR). The NWDAF may be a function configured for communication according to TS 23.288 of 3GPP. The LMF may be a function configured for communication according to TS 23.273 and TS 23.271 of 3GPP. The AMF may be a function configured for communication according to TS 23.501, TS 23.502 and TS 23.503 of 3GPP.

The sensing node 730 herein may denote a client device or a network access node. A client device, which may in turn be denoted as a user device, a User Equipment (UE), a mobile station, an internet of things (IoT) device, a sensor device, a wireless terminal and/or a mobile terminal, is enabled to communicate wirelessly in a wireless communication system, sometimes also referred to as a cellular radio system. The UEs may further be referred to as mobile telephones, cellular telephones, computer tablets or laptops with wireless capability. The UEs in this context may be, for example, portable, pocket-storable, hand-held, computer-comprised, or vehicle-mounted mobile devices, enabled to communicate voice and/or data, via the radio access network, with another entity, such as another receiver or a server. The UE can be a Station (STA), which is any device that contains an IEEE 802.11-conformant Media Access Control (MAC) and Physical Layer (PHY) interface to the Wireless Medium (WM). The UE may also be configured for communication in 3GPP related LTE and LTE-Advanced, in WiMAX and its evolution, and in fifth generation wireless technologies, such as New Radio.

A network access node may in turn be denoted as a radio network access node, an access network access node, an access point, or a base station, e.g. a Radio Base Station (RBS), which in some networks may be referred to as transmitter, "gNB", "gNodeB", "eNB", "eNodeB", "NodeB" or "B node", depending on the technology and terminology used. The radio network access nodes may be of different classes such as e.g. macro eNodeB, home eNodeB or pico base station, based on transmission power and thereby also cell size. The radio network access node can be a Station (STA), which is any device that contains an IEEE 802.11-conformant Media Access Control (MAC) and Physical Layer (PHY) interface to the Wireless Medium (WM). The radio network access node may also be a base station corresponding to the fifth generation (5G) wireless systems. The radio network access node herein may also be denoted as a road side unit such as e.g. a road side unit in a V2X application. The road side unit may be any device/node deployed along roads to improve vehicular network performance, as well as extend the coverage. The road side unit may be a stand-alone device/node or may be integrated with e.g. a network access node.

Furthermore, any method according to examples of the invention may be implemented in a computer program, having code means, which when run by processing means causes the processing means to execute the steps of the method. The computer program is included in a computer readable medium of a computer program product. The computer readable medium may comprise essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

Moreover, it is realized by the skilled person that examples of the first network function 100, the second network function 300, and the sensing node 730 comprises the necessary communication capabilities in the form of e.g., functions, means, units, elements, etc., for performing the solution. Examples of other such means, units, elements and functions comprise: processors, memory, buffers, control logic, encoders, decoders, rate matchers, de-rate matchers, mapping units, multipliers, decision units, selecting units, switches, interleavers, de-interleavers, modulators, demodulators, inputs, outputs, antennas, amplifiers, receiver units, transmitter units, DSPs, MSDs, TCM encoder, TCM decoder, power supply units, power feeders, communication interfaces, communication protocols, etc. which are suitably arranged together for performing the solution.

Especially, the processor(s) of the first network function 100, the second network function 300, and the sensing node 730 may comprise, e.g., one or more instances of a Central Processing Unit (CPU), a processing unit, a processing circuit, a processor, an Application Specific Integrated Circuit (ASIC), a microprocessor, or other processing logic that may interpret and execute instructions. The expression "processor" may thus represent a processing circuitry comprising a plurality of processing circuits, such as, e.g., any, some or all of the ones mentioned above. The processing circuitry may further perform data processing functions for inputting, outputting, and processing of data comprising data buffering and device control functions, such as call processing control, user interface control, or the like.

Finally, it should be understood that the invention is not limited to the examples described above, but also relates to and incorporates all examples within the scope of the appended independent claims.

## Claims

1. A first network function (100) for a communication system (500), the first network function (100) being configured to:
receive a sensing request (510) indicating one or more sensing requirements for a sensing event, the sensing event comprising a sensing target (710) in a sensing area (720);
determine a sensing type for the sensing event based on the sensing request (510), the sensing type involving one or more sensing nodes (730) for the sensing event;
transmit a service request (520) to a second network function (300), the service request (520) indicating the sensing event;
receive a service response (530) from the second network function (300), the service response (530) indicating a first set of sensing nodes (730') for the sensing event, wherein the first set of sensing nodes (730') are sensing nodes (730) which can be used to support the sensing event;
select a second set of sensing nodes (730") for the sensing event from the first set of sensing nodes (730') based on the sensing type; and
transmit a sensing event configuration (540) indicating the second set of sensing nodes (730") for the sensing event.

2. The first network function (100) according to claim 1, wherein the one or more sensing requirements comprises one or more key performance indicators associated with: a horizontal accuracy/resolution, a vertical accuracy/resolution, an orientation accuracy/resolution, and a velocity accuracy/resolution for the sensing event, and wherein the service request (520) further indicates at least one of: a geographical coordinate of the sensing target (710), a maximum sensing range with respect to the sensing target (710), and a maximum allowed relative speed of a sensing node (730) with respect to the sensing target (710).

3. The first network function (100) according to claim 1 or 2, wherein the service response (530) indicates an identity for each sensing node (730) in the first set of sensing nodes (730').

4. The first network function (100) according to any one of the preceding claims, configured to:
select the second set of sensing nodes (730") further based on a sensing capability and a sensing configuration of each sensing node (730) in the first set of sensing nodes (730').

5. The first network function (100) according to claim 4, configured to:
receive information about the sensing capability and the sensing configuration of a sensing node (730) from the sensing node (730) or an application function (610) associated with the sensing node (730).

6. The first network function (100) according to claim 4 or 5, wherein
the sensing capability comprises one or more of: a supported sensing type, a supported sensing method, a supported sensing hardware, a supported sensing software, and supported sensing measurements; and
the sensing configuration comprises one or more of: a sensing activation time period, a sensing rate, and the sensing area.

7. The first network function (100) according to any one of the preceding claims, configured to:
determine a sensing method for the sensing event based on the sensing request (510), the sensing method indicating a method for deriving a sensing result for the sensing event based on sensing measurements; and
select the second set of sensing nodes (730") further based on the sensing method.

8. The first network function (100) according to claim 7, configured to:
receive sensing measurements from the second set of sensing nodes (730"); and
determine the sensing result for the sensing event based on the sensing measurements, the sensing type and the sensing method.

9. The first network function (100) according to claim 8, configured to:
determine that the sensing event has occurred based on the sensing result; and
transmit a sensing notification (550) indicating that the sensing event has occurred.

10. The first network function (100) according to claim 9, configured to:
receive a sensing event subscription request (560) from an application function (610) or an access and mobility management function (620); and
transmit the sensing notification (550) to the application function (610) or the access and mobility management function (620).

11. The first network function (100) according to any one of the preceding claims, configured to:
receive the sensing request (510) from an application function (610) or an access and mobility management function (620); and
transmit the sensing event configuration (540) to a radio access network (630) via an access and mobility management function (620).

12. A second network function (300) for a communication system (500), the second network function (300) being configured to:
receive a service request (520) from a first network function (100), the service request (520) indicating a sensing event, the sensing event comprising a sensing target (710) in a sensing area (720);
determine a first set of sensing nodes (730') for the sensing event based on the service request (520), wherein the first set of sensing nodes (730') are sensing nodes (730) which can be used to support the sensing event, said sensing nodes (730) being involved in a sensing type for the sensing event determined by the first network function (100) based on a sensing request (510); and
transmit a service response (530) to the first network function (100), the service response (530) indicating the first set of sensing nodes (730') for the sensing event.

13. A method (200) for a first network function (100), the method (200) comprising:
receiving (202) a sensing request (510) indicating one or more sensing requirements for a sensing event, the sensing event comprising a sensing target (710) in a sensing area (720);
determining (204) a sensing type for the sensing event based on the sensing request (510), the sensing type involving one or more sensing nodes (730) for the sensing event;
transmitting (206) a service request (520) to a second network function (300), the service request (520) indicating the sensing event;
receiving (208) a service response (530) from the second network function (300), the service response (530) indicating a first set of sensing nodes (730') for the sensing event, wherein the first set of sensing nodes (730') are sensing nodes (730) which can be used to support the sensing event;
selecting (210) a second set of sensing nodes (730") for the sensing event from the first set of sensing nodes (730') based on the sensing type; and
transmitting (212) a sensing event configuration (540) indicating the second set of sensing nodes (730") for the sensing event.

14. A method (400) for a second network function (300), the method (400) comprising:
receiving (402) a service request (520) from a first network function (100), the service request (520) indicating a sensing event, the sensing event comprising a sensing target (710) in a sensing area (720);
determining (404) a first set of sensing nodes (730') for the sensing event based on the service request (520), wherein the first set of sensing nodes (730') are sensing nodes (730) which can be used to support the sensing event, said sensing nodes (730) being involved in a sensing type for the sensing event determined by the first network function (100) based on a sensing request (510); and
transmitting (406) a service response (530) to the first network function (100), the service response (530) indicating the first set of sensing nodes (730') for the sensing event.

15. A computer program with a program code for performing a method according to claim 13 or 14 when the computer program runs on a computer.

## Patentansprüche

1. Erste Netzwerkfunktion (100) für ein Kommunikationssystem (500), wobei die erste Netzwerkfunktion (100) zu Folgendem konfiguriert ist:
Empfangen einer Erfassungsanforderung (510), die eine oder mehrere Erfassungsanforderungen für ein Erfassungsereignis angibt, wobei das Erfassungsereignis ein Erfassungsziel (710) in einem Erfassungsbereich (720) umfasst;
Bestimmen einer Erfassungsart für das Erfassungsereignis basierend auf der Erfassungsanforderung (510), wobei die Erfassungsart einen oder mehrere Erfassungsknoten (730) für das Erfassungsereignis involviert;
Übertragen einer Dienstanforderung (520) an eine zweite Netzwerkfunktion (300), wobei die Dienstanforderung (520) das Erfassungsereignis angibt;
Empfangen einer Dienstantwort (530) von der zweiten Netzwerkfunktion (300), wobei die Dienstantwort (530) einen ersten Satz von Erfassungsknoten (730') für das Erfassungsereignis angibt, wobei es sich bei dem ersten Satz von Erfassungsknoten (730') um Erfassungsknoten (730) handelt, die verwendet werden können, um das Erfassungsereignis zu unterstützen;
Auswählen eines zweiten Satzes von Erfassungsknoten (730'') für das Erfassungsereignis aus dem ersten Satz von Erfassungsknoten (730') basierend auf der Erfassungsart; und
Übertragen einer Erfassungsereigniskonfiguration (540), die den zweiten Satz von Erfassungsknoten (730") für das Erfassungsereignis angibt.

2. Erste Netzwerkfunktion (100) nach Anspruch 1, wobei die eine oder mehreren Erfassungsanforderungen eine oder mehrere Leistungskennzahlen umfassen, die mit Folgendem verknüpft sind: einer horizontalen Genauigkeit/Auflösung, einer vertikalen Genauigkeit/Auflösung, einer Ausrichtungsgenauigkeit/-auflösung und einer Geschwindigkeitsgenauigkeit/-auflösung für das Erfassungsereignis, und wobei die Dienstanforderung (520) ferner mindestens eines von Folgenden angibt: eine geografische Koordinate des Erfassungsziels (710), eine maximale Erfassungsreichweite in Bezug auf das Erfassungsziel (710) und eine maximal zulässige Relativgeschwindigkeit eines Erfassungsknotens (730) in Bezug auf das Erfassungsziel (710).

3. Erste Netzwerkfunktion (100) nach Anspruch 1 oder 2, wobei die Dienstantwort (530) eine Identität für jeden Erfassungsknoten (730) in dem ersten Satz von Erfassungsknoten (730') angibt.

4. Erste Netzwerkfunktion (100) nach einem der vorhergehenden Ansprüche, die zu Folgendem konfiguriert ist:
Auswählen des zweiten Satzes von Erfassungsknoten (730") ferner basierend auf einer Erfassungsfähigkeit und einer Erfassungskonfiguration jedes Erfassungsknotens (730) in dem ersten Satz von Erfassungsknoten (730').

5. Erste Netzwerkfunktion (100) nach Anspruch 4, die zu Folgendem konfiguriert ist:
Empfangen von Informationen über die Erfassungsfähigkeit und die Erfassungskonfiguration eines Erfassungsknotens (730) von dem Erfassungsknoten (730) oder einer Anwendungsfunktion (610), die mit dem Erfassungsknoten (730) verknüpft ist.

6. Erste Netzwerkfunktion (100) nach Anspruch 4 oder 5, wobei die Erfassungsfähigkeit eines oder mehrere von Folgenden umfasst: eine unterstützte Erfassungsart, ein unterstütztes Erfassungsverfahren, eine unterstützte Erfassungshardware, eine unterstützte Erfassungssoftware und unterstützte Erfassungsmessungen; und
die Erfassungskonfiguration eines oder mehrere von Folgenden umfasst: einen Erfassungsaktivierungszeitraum, eine Erfassungsrate und den Erfassungsbereich.

7. Erste Netzwerkfunktion (100) nach einem der vorhergehenden Ansprüche, die zu Folgendem konfiguriert ist:
Bestimmen eines Erfassungsverfahrens für das Erfassungsereignis basierend auf der Erfassungsanforderung (510), wobei das Erfassungsverfahren ein Verfahren zum Ableiten eines Erfassungsergebnisses für das Erfassungsereignis basierend auf den Erfassungsmessungen angibt; und
Auswählen des zweiten Satzes von Erfassungsknoten (730'') ferner basierend auf dem Erfassungsverfahren.

8. Erste Netzwerkfunktion (100) nach Anspruch 7, die zu Folgendem konfiguriert ist:
Empfangen von Erfassungsmessungen von dem zweiten Satz von Erfassungsknoten (730''); und
Bestimmen des Erfassungsergebnisses für das Erfassungsereignis basierend auf den Erfassungsmessungen, der Erfassungsart und dem Erfassungsverfahren.

9. Erste Netzwerkfunktion (100) nach Anspruch 8, die zu Folgendem konfiguriert ist:
Bestimmen, dass das Erfassungsereignis aufgetreten ist, basierend auf dem Erfassungsergebnis; und
Übertragen einer Erfassungsbenachrichtigung (550), die angibt, dass das Erfassungsereignis aufgetreten ist.

10. Erste Netzwerkfunktion (100) nach Anspruch 9, die zu Folgendem konfiguriert ist:
Empfangen einer Erfassungsereignis-Abonnementsanforderung (560) von einer Anwendungsfunktion (610) oder einer Zugangs- und Mobilitätsverwaltungsfunktion (620); und
Übertragen der Erfassungsbenachrichtigung (550) an die Anwendungsfunktion (610) oder die Zugangs- und Mobilitätsverwaltungsfunktion (620).

11. Erste Netzwerkfunktion (100) nach einem der vorhergehenden Ansprüche, die zu Folgendem konfiguriert ist:
Empfangen der Erfassungsanforderung (510) von einer Anwendungsfunktion (610) oder einer Zugangs- und Mobilitätsverwaltungsfunktion (620); und
Übertragen der Erfassungsereigniskonfiguration (540) an ein Funkzugangsnetzwerk (630) über eine Zugangs- und Mobilitätsverwaltungsfunktion (620).

12. Zweite Netzwerkfunktion (300) für ein Kommunikationssystem (500), wobei die zweite Netzwerkfunktion (300) zu Folgendem konfiguriert ist:
Empfangen einer Dienstanforderung (520) von einer ersten Netzwerkfunktion (100), wobei die Dienstanforderung (520) ein Erfassungsereignis angibt, wobei das Erfassungsereignis ein Erfassungsziel (710) in einem Erfassungsbereich (720) umfasst;
Bestimmen eines ersten Satzes von Erfassungsknoten (730') für das Erfassungsereignis basierend auf der Dienstanforderung (520), wobei es sich bei dem ersten Satz von Erfassungsknoten (730') um Erfassungsknoten (730) handelt, die verwendet werden können, um das Erfassungsereignis zu unterstützen, wobei die Erfassungsknoten (730) an einer Erfassungsart für das Erfassungsereignis beteiligt sind, das durch die erste Netzwerkfunktion (100) basierend auf einer Erfassungsanforderung (510) bestimmt wird; und
Übertragen einer Dienstantwort (530) an die erste Netzwerkfunktion (100), wobei die Dienstantwort (530) den ersten Satz von Erfassungsknoten (730') für das Erfassungsereignis angibt.

13. Verfahren (200) für eine erste Netzwerkfunktion (100), wobei das Verfahren (200) Folgendes umfasst:
Empfangen (202) einer Erfassungsanforderung (510), die eine oder mehrere Erfassungsanforderungen für ein Erfassungsereignis angibt, wobei das Erfassungsereignis ein Erfassungsziel (710) in einem Erfassungsbereich (720) umfasst;
Bestimmen (204) einer Erfassungsart für das Erfassungsereignis basierend auf der Erfassungsanforderung (510), wobei die Erfassungsart einen oder mehrere Erfassungsknoten (730) für das Erfassungsereignis involviert;
Übertragen (206) einer Dienstanforderung (520) an eine zweite Netzwerkfunktion (300), wobei die Dienstanforderung (520) das Erfassungsereignis angibt;
Empfangen (208) einer Dienstantwort (530) von der zweiten Netzwerkfunktion (300), wobei die Dienstantwort (530) einen ersten Satz von Erfassungsknoten (730') für das Erfassungsereignis angibt, wobei es sich bei dem ersten Satz von Erfassungsknoten (730') um Erfassungsknoten (730) handelt, die verwendet werden können, um das Erfassungsereignis zu unterstützen;
Auswählen (210) eines zweiten Satzes von Erfassungsknoten (730") für das Erfassungsereignis aus dem ersten Satz von Erfassungsknoten (730') basierend auf der Erfassungsart; und
Übertragen (212) einer Erfassungsereigniskonfiguration (540), die den zweiten Satz von Erfassungsknoten (730'') für das Erfassungsereignis angibt.

14. Verfahren (400) für eine zweite Netzwerkfunktion (300), wobei das Verfahren (400) Folgendes umfasst:
Empfangen (402) einer Dienstanforderung (520) von einer ersten Netzwerkfunktion (100), wobei die Dienstanforderung (520) ein Erfassungsereignis angibt, wobei das Erfassungsereignis ein Erfassungsziel (710) in einem Erfassungsbereich (720) umfasst;
Bestimmen (404) eines ersten Satzes von Erfassungsknoten (730') für das Erfassungsereignis basierend auf der Dienstanforderung (520), wobei es sich bei dem ersten Satz von Erfassungsknoten (730') um Erfassungsknoten (730) handelt, die verwendet werden können, um das Erfassungsereignis zu unterstützen, wobei die Erfassungsknoten (730) an einer Erfassungsart für das Erfassungsereignis beteiligt sind, das durch die erste Netzwerkfunktion (100) basierend auf einer Erfassungsanforderung (510) bestimmt wird; und
Übertragen (406) einer Dienstantwort (530) an die erste Netzwerkfunktion (100), wobei die Dienstantwort (530) den ersten Satz von Erfassungsknoten (730') für das Erfassungsereignis angibt.

15. Computerprogramm mit einem Programmcode zum Durchführen eines Verfahrens nach Anspruch 13 oder 14, wenn das Computerprogramm auf einem Computer ausgeführt wird.

## Revendications

1. Première fonction de réseau (100) pour un système de communication (500), la première fonction de réseau (100) étant configurée pour :
recevoir une demande de détection (510) indiquant une ou plusieurs exigences de détection pour un événement de détection, l'événement de détection comprenant une cible de détection (710) dans une zone de détection (720) ;
déterminer un type de détection pour l'événement de détection sur la base de la demande de détection (510), le type de détection impliquant un ou plusieurs nœuds de détection (730) pour l'événement de détection ;
transmettre une demande de service (520) à une seconde fonction réseau (300), la demande de service (520) indiquant l'événement de détection ;
recevoir une réponse de service (530) provenant de la seconde fonction réseau (300), la réponse de service (530) indiquant un premier ensemble de nœuds de détection (730') pour l'événement de détection, dans lequel le premier ensemble de nœuds de détection (730') sont des nœuds de détection (730) qui peuvent être utilisés pour prendre en charge l'événement de détection ;
sélectionner un second ensemble de nœuds de détection (730") pour l'événement de détection provenant du premier ensemble de nœuds de détection (730') sur la base du type de détection ; et
transmettre une configuration d'événement de détection (540) indiquant le second ensemble de nœuds de détection (730") pour l'événement de détection.

2. Première fonction réseau (100) selon la revendication 1, dans laquelle les une ou plusieurs exigences de détection comprennent un ou plusieurs indicateurs de performance clés associés aux éléments suivants : une précision/résolution horizontale, une précision/résolution verticale, une précision/résolution d'orientation et une précision/résolution de vitesse pour l'événement de détection, et dans laquelle la requête de service (520) indique en outre au moins un des éléments suivants : une coordonnée géographique de la cible de détection (710), une portée de détection maximale par rapport à la cible de détection (710) et une vitesse relative maximale autorisée d'un nœud de détection (730) par rapport à la cible de détection (710).

3. Première fonction réseau (100) selon la revendication 1 ou 2, dans laquelle la réponse de service (530) indique une identité pour chaque nœud de détection (730) dans le premier ensemble de nœuds de détection (730').

4. Première fonction réseau (100) selon l'une quelconque des revendications précédentes, configuré pour :
sélectionner le second ensemble de nœuds de détection (730") sur la base en outre de la d'une capacité de détection et d'une configuration de détection de chaque nœud de détection (730) dans le premier ensemble de nœuds de détection (730').

5. Première fonction réseau (100) selon la revendication 4, configurée pour :
recevoir des informations sur la capacité de détection et la configuration de détection d'un nœud de détection (730) provenant du nœud de détection (730) ou d'une fonction d'application (610) associée au nœud de détection (730).

6. Première fonction de réseau (100) selon la revendication 4 ou 5, dans laquelle
la capacité de détection comprend un ou plusieurs des éléments suivants : un type de détection pris en charge, un procédé de détection prise en charge, un matériel de détection pris en charge, un logiciel de détection pris en charge et des mesures de détection prises en charge ; et
la configuration de détection comprend un ou plusieurs des éléments suivants : une période d'activation de la détection, une fréquence de détection et la zone de détection.

7. Première fonction de réseau (100) selon l'une quelconque des revendications précédentes, configurée pour :
déterminer un procédé de détection pour l'événement de détection sur la base de la demande de détection (510), le procédé de détection indiquant un procédé pour dériver un résultat de détection pour l'événement de détection sur la base de mesures de détection ; et
sélectionner le second ensemble de nœuds de détection (730") sur la base en outre du procédé de détection.

8. Première fonction de réseau (100) selon la revendication 7, configurée pour :
recevoir les mesures de détection provenant du second ensemble de nœuds de détection (730") ; et
déterminer le résultat de détection pour l'événement de détection sur la base des mesures de détection, du type de détection et du procédé de détection.

9. Première fonction de réseau (100) selon la revendication 8, configurée pour :
déterminer que l'événement de détection s'est produit sur la base du résultat de la détection ; et
transmettre une notification de détection (550) indiquant que l'événement de détection s'est produit.

10. Première fonction de réseau (100) selon la revendication 9, configurée pour :
recevoir une demande d'abonnement à un événement de détection (560) provenant d'une fonction d'application (610) ou d'une fonction de gestion d'accès et de mobilité (620) ; et
transmettre la notification de détection (550) à la fonction d'application (610) ou à la fonction de gestion d'accès et de mobilité (620).

11. Première fonction de réseau (100) selon l'une quelconque des revendications précédentes, configurée pour :
recevoir la demande de détection (510) provenant d'une fonction d'application (610) ou d'une fonction de gestion d'accès et de mobilité (620) ; et
transmettre la configuration de l'événement de détection (540) à un réseau d'accès radio (630) via une fonction de gestion d'accès et de mobilité (620).

12. Seconde fonction réseau (300) pour un système de communication (500), la seconde fonction réseau (300) étant configurée pour :
recevoir une demande de service (520) provenant d'une première fonction réseau (100), la demande de service (520) indiquant un événement de détection, l'événement de détection comprenant une cible de détection (710) dans une zone de détection (720) ;
déterminer un premier ensemble de nœuds de détection (730') pour l'événement de détection sur la base de la demande de service (520), dans laquelle le premier ensemble de nœuds de détection (730') sont des nœuds de détection (730) pouvant être utilisés pour prendre en charge l'événement de détection, lesdits nœuds de détection (730) étant impliqués dans un type de détection pour l'événement de détection déterminé par la première fonction réseau (100) sur la base d'une demande de détection (510) ; et
transmettre une réponse de service (530) à la première fonction réseau (100), la réponse de service (530) indiquant le premier ensemble de nœuds de détection (730') pour l'événement de détection.

13. Procédé (200) pour une première fonction de réseau (100), le procédé (200) comprenant :
la réception (202) d'une demande de détection (510) indiquant une ou plusieurs exigences de détection pour un événement de détection, l'événement de détection comprenant une cible de détection (710) dans une zone de détection (720) ;
la détermination (204) d'un type de détection pour l'événement de détection sur la base de la demande de détection (510), le type de détection impliquant un ou plusieurs nœuds de détection (730) pour l'événement de détection ;
la transmission (206) d'une demande de service (520) à une seconde fonction réseau (300), la demande de service (520) indiquant l'événement de détection ;
la réception (208) d'une réponse de service (530) provenant de la seconde fonction réseau (300), la réponse de service (530) indiquant un premier ensemble de nœuds de détection (730') pour l'événement de détection, dans laquelle le premier ensemble de nœuds de détection (730') sont des nœuds de détection (730) qui peuvent être utilisés pour prendre en charge l'événement de détection ;
la sélection (210) d'un second ensemble de nœuds de détection (730") pour l'événement de détection provenant du premier ensemble de nœuds de détection (730') sur la base du type de détection ; et
la transmission (212) d'une configuration d'événement de détection (540) indiquant le second ensemble de nœuds de détection (730") pour l'événement de détection.

14. Procédé (400) pour une seconde fonction réseau (300), le procédé (400) comprenant :
la réception (402) d'une demande de service (520) provenant d'une première fonction réseau (100), la demande de service (520) indiquant un événement de détection, l'événement de détection comprenant une cible de détection (710) dans une zone de détection (720) ;
la détermination (404) d'un premier ensemble de nœuds de détection (730') pour l'événement de détection sur la base de la demande de service (520), dans laquelle le premier ensemble de nœuds de détection (730') sont des nœuds de détection (730) pouvant être utilisés pour prendre en charge l'événement de détection, lesdits nœuds de détection (730) étant impliqués dans un type de détection pour l'événement de détection déterminé par la première fonction réseau (100) sur la base d'une demande de détection (510) ; et
la transmission (406) d'une réponse de service (530) à la première fonction réseau (100), la réponse de service (530) indiquant le premier ensemble de nœuds de détection (730') pour l'événement de détection.

15. Programme informatique avec un code de programme pour réaliser un procédé selon la revendication 13 ou 14 lorsque le programme informatique fonctionne sur un ordinateur.
